# EUROPEAN PATENT APPLICATION

(11) **EP 4 549 199 A1**
(43) Date of publication of application: **07.05.2025**
(21) Application number: 23831012.2
(22) Date of filing: 07.06.2023
(51) Int. Cl.: B60K 1/04, A01B 59/06

(54) **WORK MACHINE**

(30) Priority: 30.06.2022 JP 2022105613
(71) Applicant: Kubota Corporation, Osaka 556-8601 (JP)
(72) Inventor: KINUGAWA Ryosuke, Sakai-shi, Osaka 590-0908 (JP); IKEDA Ryo, Sakai-shi, Osaka 590-0908 (JP); MIURA Keisuke, Sakai-shi, Osaka 590-0908 (JP); ISHIHARA Kenji, Sakai-shi, Osaka 590-0908 (JP)
(74) Representative: Cabinet Beau de Loménie
(86) International application number: PCT/JP2023/021274
(87) International publication number: WO 2024/004562

(57) **Abstract**

It is a purpose to provide a working machine capable of replacing a storing device that stores an energy source and suppressing deterioration of working efficiency. A working machine 1 includes a storing device that stores an energy source, the working machine is driven by the energy source. The storing device includes: a main battery (first storing device) 12M provided in the working machine 1; and a sub battery (second storing device) 12S provided at a position different from the main battery 1 of the working machine **1.** The sub battery 12S of the main battery 12M and the sub battery 12S attachable to and detachable from the working machine **1.** Therefore, it is possible to replace a storing device that stores an energy source and suppress deterioration of working efficiency.

## Description

### TECHNICAL FIELD

The present invention relates to a working machine including, for example, an agricultural machine and a construction machine.

### BACKGROUND ART

Hitherto, a working machine of Patent Literature 1 is known as a working machine such as an agricultural machine. The working machine of Patent Literature 1 includes a working device coupled to a traveling vehicle. A prime mover that drives the traveling vehicle is an electric motor. The electric motor is supplied with electric power from a battery provided in a vehicle body. The battery can be charged from the outside of the working machine.

### CITATION LIST

### PATENT LITERATURE

Patent Literature 1: JP 2013-22980 A (Paragraph 0029 and the like)

### SUMMARY OF INVENTION

In general, when stored electric energy of the battery or the like is used up, replenishment such as charging is required. Since traveling and work are stopped at the time of charging, overall working efficiency may deteriorate. Therefore, there is a demand for saving time required for charging by replacing the battery or the like provided in the working machine with a charged battery or the like.

Therefore, in view of the above demand, an object of the present invention is to provide a working machine capable of replacing a storing device that stores an energy source and suppressing deterioration of working efficiency.

### SOLUTION TO PROBLEM

The technical means of the present invention for solving the technical problem is characterized by the following points. A working machine according to the present invention includes a storing device that stores an energy source, the working machine is driven by the energy source. The storing device includes: a first storing device provided in the working machine; and a second storing device provided at a position different from the first storing device of the working machine, and at least one of the first storing device and the second storing device is attachable to and detachable from the working machine.

The working machine according to the present invention includes: a traveling vehicle; and a working device provided on the traveling vehicle, wherein the first storing device is not attachable to and detachable from the working machine and supplies the energy source for driving the traveling vehicle and/or the working device, and the second storing device is attachable to and detachable from the working machine and supplies the energy source for driving the traveling vehicle in a case where the energy source for driving the traveling vehicle and/or the working device is supplied by the first storing device.

In the working machine according to the present invention, the second storing device supplies the energy source for driving the working device in a case where the energy source for driving the traveling vehicle and/or the working device is supplied by the first storing device.

The working machine according to the present invention includes: a traveling vehicle; a working device provided on the traveling vehicle; and a regeneration device that regenerates electric power from the traveling vehicle, wherein the first storing device is a battery that is not attachable to and detachable from the working machine and charges and discharges electric energy as the energy source, the second storing device is a battery that is attachable to and detachable from the working machine and charges and discharges electric energy as the energy source, and the working machine comprises a charge control unit that charges the second storing device with electric energy regenerated by the regeneration device in a case where a remaining level of the electric energy in the first storing device is equal to or higher than a predetermined value.

In the working machine according to the present invention, the first storing device is a battery that is not attachable to and detachable from the working machine and charges and discharges electric energy as the energy source, the second storing device is a battery that is attachable to and detachable from the working machine and charges and discharges electric energy as the energy source, and the working machine comprises a discharge control unit that makes a discharge amount from one of the first storing device and the second storing device having a higher remaining level of the electric energy larger than a discharge amount from other of the first storing device and the second storing device.

The working machine according to the present invention includes: a traveling vehicle; and a working device provided on the traveling vehicle, wherein the first storing device is not attachable to and detachable from the working machine, and the second storing device is attachable to and detachable from the working machine and is mounted at a position in the traveling vehicle on a side opposite to the working device.

The working machine according to the present invention includes: a traveling vehicle; a working device; a first coupling device provided in the traveling vehicle and that couples the working device; a supply path which is a path of the energy source supplied from the storing device to the working device; and a connector that connects and disconnects the supply path, allows supply of the energy source when connected, and cuts off supply of the energy source when disconnected.

In the working machine according to the present invention, the connector is provided on the traveling vehicle so as to face the working device when the working device is coupled to the first coupling device.

In the working machine according to the present invention, the storing device is a battery that charges and discharges electric energy as the energy source, the working device receives a signal from the traveling vehicle, and the working machine comprises: a communication path that transmits the signal from the traveling vehicle toward the working device; and a connector that connects and disconnects the supply path and the communication path, allows supply of the energy source and transmission of the signal when connected, and cuts off supply of the energy source and transmission of the signal when disconnected.

The working machine according to the present invention includes: a second coupling device that couples the second storing device and in which mounting of the second storing device on the working machine is achieved when the second storing device is coupled, wherein the second storing device is a battery that is attachable to and detachable from the second coupling device and charges and discharges electric energy as the energy source, and includes a battery terminal portion for discharging the electric energy, the second coupling device includes a terminal connection portion connected to the battery terminal portion when the second storing device is coupled, and the electric energy is supplied from the second storing device to the working machine via the battery terminal portion and the terminal connection portion.

### ADVANTAGEOUS EFFECTS OF INVENTION

According to the present invention, it is possible to replace a storing device that stores an energy source and suppress deterioration of working efficiency.

### BRIEF DESCRIPTION OF DRAWINGS

Fig. 1 is an overall view of a working machine according to a first embodiment.
Fig. 2 is a plan view of the working machine shown in Fig. 1.
Fig. 3 is a perspective view of a rear side of a vehicle body including a first coupling device of the working machine shown in Fig. 1.
Fig. 4 is a perspective view of a front side of the vehicle body including a second coupling device and a sub battery of the working machine shown in Fig. 1, and is a view showing a state in which the sub battery is mounted.
Fig. 5 is a perspective view of the front side of the vehicle body including the second coupling device and the sub battery of the working machine shown in Fig. 1, and is a view showing a state in which the sub battery is separated.
Fig. 6 is a diagram showing a power transmission system and an electric power supply system of the working machine shown in Fig. 1.
Fig. 7 is a diagram showing a control system and an information communication system of the working machine shown in Fig. 1.
Fig. 8 is a side view for explaining a state in which a working device is coupled to a traveling vehicle of the working machine shown in Fig. 1.
Fig. 9 is a time chart showing a change in a remaining level of each of a main battery and the sub battery in a case where charge/discharge control is performed by a control device of the working machine shown in Fig. 1.
Fig. 10 is a flowchart showing a series of operations of the battery charge/discharge control and control related to battery replacement by the control device of the working machine shown in Fig. 1.
Fig. 11 is a view for explaining an operation of delivery and collection of the battery between a delivery base and a farm field.

### DESCRIPTION OF EMBODIMENTS

Hereinafter, embodiments of the present invention will be described with reference to the drawings.

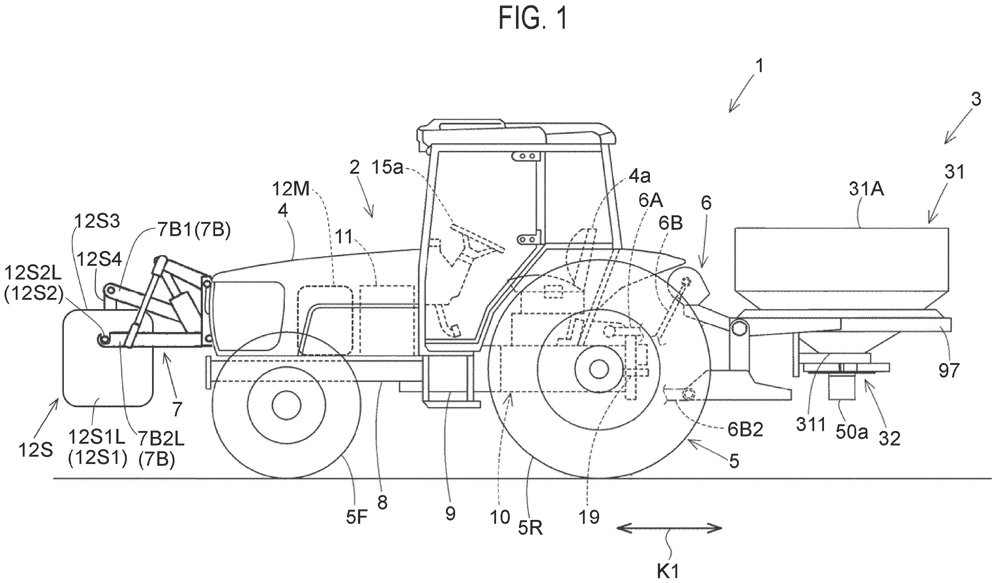

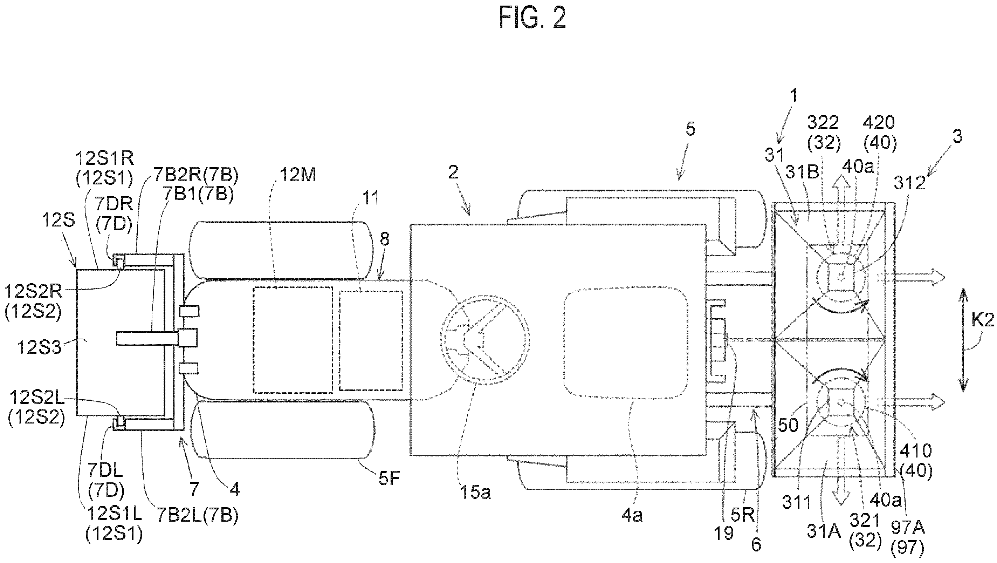

Fig. 1 is a side view of an entire working machine 1 according to an embodiment of the present invention. Fig. 2 is a plan view of the working machine 1. As shown in Figs. 1 and 2, the working machine 1 includes a traveling vehicle 2 and a working device 3. The working machine 1 further includes a main battery (first storing device) 12M and a sub battery (second storing device) 12S. The main battery 12M and the sub battery 12S store electric energy (energy source) for driving the traveling vehicle 2 and the working device 3. In the present embodiment, the main battery 12M and the sub battery 12S are provided at different positions on the working machine 1. The main battery 12M is installed in the traveling vehicle 2 and is not detachable. The sub battery 12S is installed in the traveling vehicle 2, is detachable, and is replaceable.

The traveling vehicle 2 travels while towing the working device 3. In the present embodiment, since the traveling vehicle 2 is a tractor, the traveling vehicle 2 will be described below as a tractor 2. However, the traveling vehicle 2 is not limited to the tractor, and may be an agricultural vehicle such as a combine harvester or a rice transplanter, or may be a construction vehicle or the like. In addition, the traveling vehicle 2 may be a pickup truck. The working device 3 is a device that performs work (agricultural work) on a farm field or the like. The working device 3 is an implement, an attachment, or the like coupled to the traveling vehicle 2.

### <Tractor>

The tractor 2 includes a vehicle body 4, a traveling device 5, a first coupling device 6, and a second coupling device 7. In the embodiment of the present invention, a front side (a left side in Fig. 1) of a driver seated on a driver seat 4a loaded on the vehicle body 4 will be described as a front side, a rear side (a right side in Fig. 1) of the driver will be described as a rear side, a left side (a front side in Fig. 1) of the driver will be described as a left side, and a right side (a back side in Fig. 1) of the driver will be described as a right side. In addition, a horizontal direction K2 (see Fig. 2), which is a direction orthogonal to a front-rear direction K1 (see Fig. 1), will be described as a vehicle width direction.

The vehicle body 4 includes a vehicle body frame 8, a clutch housing 9, a transmission case 10, a prime mover 11, and the main battery 12M. The vehicle body frame 8 extends in the front-rear direction of the vehicle body 4. The prime mover 11 and the main battery 12M are loaded on the vehicle body frame 8. In the present embodiment, the prime mover 11 is an electric motor. Hereinafter, it is assumed that the prime mover 11 is an electric motor 11. The electric motor 11 is driven by electric energy supplied from the main battery 12M and the sub battery 12S.

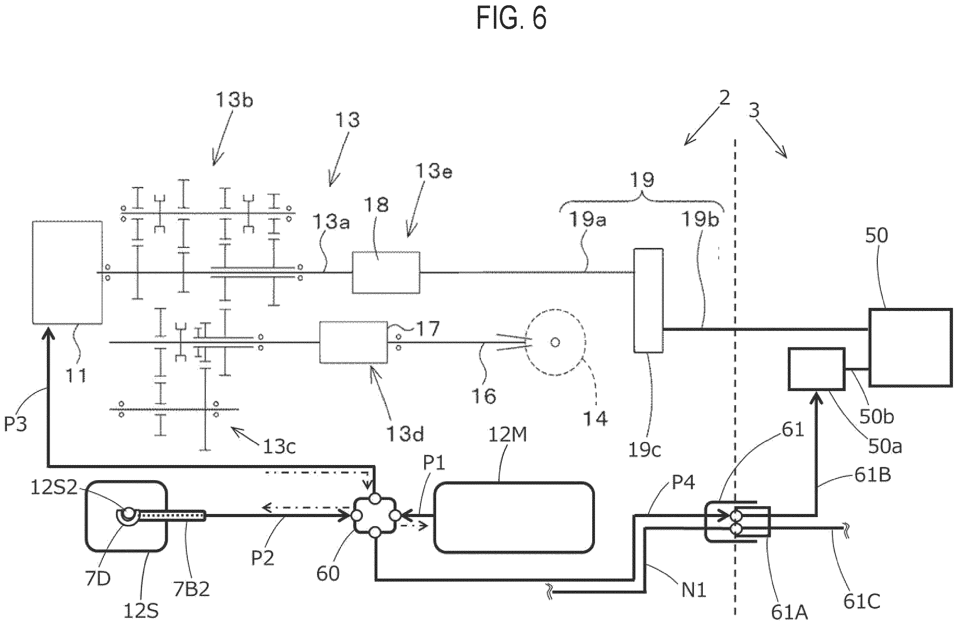

The main battery 12M includes a battery pack, an electric unit (a relay, a fuse, or the like), and cooling means inside a substantially rectangular parallelepiped casing. The battery pack includes a plurality of battery modules. The battery module includes a plurality of cells. The main battery 12M configured as described above is a battery capable of charging and discharging electric energy, specifically, a lithium ion battery. The electric energy stored in the main battery 12M is transmitted to a main power supply path P1 described below (see Fig. 6).

The electric motor 11 and the main battery 12M are loaded on the vehicle body frame 8 and disposed at a front portion of the vehicle body 4. The clutch housing 9 is connected to a rear portion of the electric motor 11 and houses a clutch. The transmission case 10 is coupled to a rear portion of the clutch housing 9 and extends rearward. The transmission case 10 houses a transmission device 13, a rear wheel differential device 14, and the like described below. The traveling device 5 includes a front wheel 5F provided at the front portion of the vehicle body 4 and a rear wheel 5R provided at the rear portion of the vehicle body 4. The front wheel 5F is supported by the vehicle body frame 8. The rear wheel 5R is supported by an output shaft of the rear wheel differential device 14. The traveling device 5 is a tire type in the present embodiment, and may be a crawler type.

The first coupling device 6 is a device for coupling the working device 3 to a rear portion of the tractor 2. In the present embodiment, the first coupling device 6 includes a three-point link mechanism. However, a configuration of the first coupling device 6 is not particularly limited as long as the working device 3 can be coupled to a rear portion of the traveling vehicle 2. For example, in a case where the traveling vehicle 2 is a pickup truck, the first coupling device 6 couples the working device 3 by a mechanism other than the three-point link mechanism.

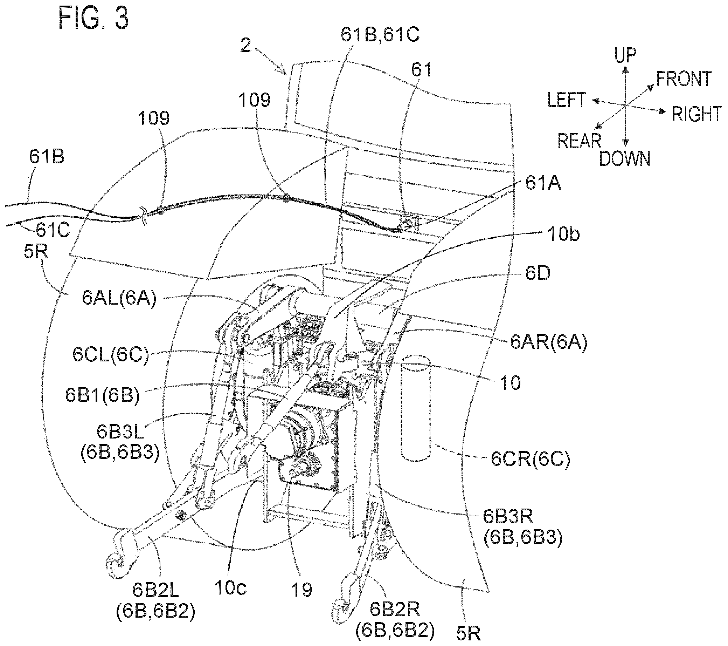

As shown in Fig. 3, the first coupling device 6 is coupled to a rear portion of the transmission case 10. The first coupling device 6 includes a lift arm 6A, a three-point link mechanism 6B, and a shift cylinder 6C. The lift arm 6A includes a first lift arm 6AL and a second lift arm 6AR. The first lift arm 6AL is disposed on one side (left side) in the vehicle width direction. The second lift arm 6AR is disposed on the other side (right side) in the vehicle width direction. Front end portions of the first lift arm 6AL and the second lift arm 6AR are pivotally supported by a horizontal shaft 6D supported on an upper portion of the transmission case 10, and extend rearward.

The three-point link mechanism 6B includes a top link 6B1, a lower link 6B2, and a lift rod 6B3. The top link 6B1 is disposed between the first lift arm 6AL and the second lift arm 6AR, and has a front end portion pivotally supported by a first pivot support portion 10b provided on an upper portion of the transmission case 10. The lower link 6B2 includes a first lower link 6B2L and a second lower link 6B2R. Front end portions of the first lower link 6B2L and the second lower link 6B2R are pivotally supported by second pivot support portions 10c provided on a lower left portion and a lower right portion of the transmission case 10. The lift rod 6B3 includes a first lift rod 6B3L and a second lift rod 6B3R. An upper end portion of the first lift rod 6B3L is connected to a rear end portion of the first lift arm 6AL, and a lower end portion of the first lift rod 6B3L is connected to a middle portion of the first lower link 6B2L in a length direction. An upper end portion of the second lift rod 6B3R is connected to a rear end portion of the second lift arm 6AR, and a lower end portion of the second lift rod 6B3R is connected to a middle portion of the second lower link 6B2R in the length direction.

A joint that can couple the working device 3 is provided at a rear end portion of the top link 6B1 and a rear end portion of the lower link 6B2. By coupling the working device 3 to the rear end portion of the top link 6B1 and the rear end portion of the lower link 6B2, the working device 3 is coupled to the rear portion of the tractor 2 so as to be able to be lifted and lowered. The lift cylinder 6C is a hydraulic cylinder. The lift cylinder 6C includes a first lift cylinder 6CL and a second lift cylinder 6CR. One end portion of the first lift cylinder 6CL is connected to the first lift arm 6AL, and the other end portion of the first lift cylinder 6CL is connected to a lower left portion of the transmission case 10. One end portion of the second lift cylinder 6CR is connected to the second lift arm 6AR, and the other end portion of the second lift cylinder 6CR is connected to the lower right portion of the transmission case 10. By driving the lift cylinder 6C, the first lift arm 6AL and the second lift arm 6AR rotate about the horizontal shaft 6D and swing in a vertical direction. An electromagnetic control valve is connected to the first lift cylinder 6CL and the second lift cylinder 6CR. The electromagnetic control valve can drive (expand and contract) the first lift cylinder 6CL and the second lift cylinder 6CR based on a control signal from a control device 20.

By driving the lift cylinder 6C, a height of the working device 3 and an inclination of the working device 3 in the vehicle width direction (a difference between a height of a right portion and a height of a left portion) can be adjusted. At the time of adjusting the height, both the first lift cylinder 6CL and the second lift cylinder 6CR are similarly driven. At the time of adjusting the inclination, one of the first lift cylinder 6CL and the second lift cylinder 6CR is driven. Specifically, the lift cylinder disposed on a side where the height of the working device 3 is small is expanded, or the lift cylinder disposed on a side where the height is large is driven to be contracted.

The working device 3 is, for example, a spreading device for spreading a spread object (particulate matter or the like) such as a fertilizer or a chemical, a tilling device for tilling, a harvesting device for harvesting, a mowing device for mowing grass or the like, a distributing device for distributing grass or the like, a grass gathering device for gathering grass or the like, and a shaping device for shaping grass or the like. Figs. 1 and 2 show an example in which the spreading device is attached as the working device 3. The working device 3 is described in detail below.

The second coupling device 7 is a device for coupling the sub battery 12S to the front portion of the tractor 2. In the present embodiment, the second coupling device 7 includes a three-point link mechanism. However, a configuration of the second coupling device 7 is not particularly limited as long as the sub battery 12S can be coupled to the front portion of the traveling vehicle 2.

As shown in Figs. 1, 2, 4, and 5, the second coupling device 7 is provided at the foremost end portion of the vehicle body 4. The second coupling device 7 includes a lift arm 7A, a three-point link mechanism 7B, a shift cylinder 7C, and an attachment hook (terminal connection portion) 7D. The lift arm 7A includes a first lift arm 7AL and a second lift arm 7AR. The first lift arm 7AL is disposed on one side (left side) in the vehicle width direction. The second lift arm 7AR is disposed on the other side (right side) in the vehicle width direction. Rear end portions of the first lift arm 7AL and the second lift arm 7AR are pivotally supported by a horizontal shaft 7E supported on an upper portion of a front end of the vehicle body 4, and extend forward.

The three-point link mechanism 7B includes a top link 7B1, a lower link 7B2, and a lift rod 7B3. The top link 7B1 is disposed between the first lift arm 7AL and the second lift arm 7AR, and has a rear end portion pivotally supported by a first pivot support portion 4b provided on the upper portion of the front end of the vehicle body 4. The lower link 7B2 includes a first lower link 7B2L and a second lower link 7B2R. Front end portions of the first lower link 7B2L and the second lower link 7B2R are pivotally supported by second pivot support portions 4c provided at a lower left portion and a lower right portion of the front end of the vehicle body 4. The lift rod 7B3 includes a first lift rod 7B3L and a second lift rod 7B3R. An upper end portion of the first lift rod 7B3L is connected to a front end portion of the first lift arm 7AL, and a lower end portion of the first lift rod 7B3L is connected to a middle portion of the first lower link 7B2L in the length direction. An upper end portion of the second lift rod 7B3R is connected to a rear end portion of the second lift arm 7AR, and a lower end portion of the second lift rod 7B3R is connected to a middle portion of the second lower link 7B2R in the length direction.

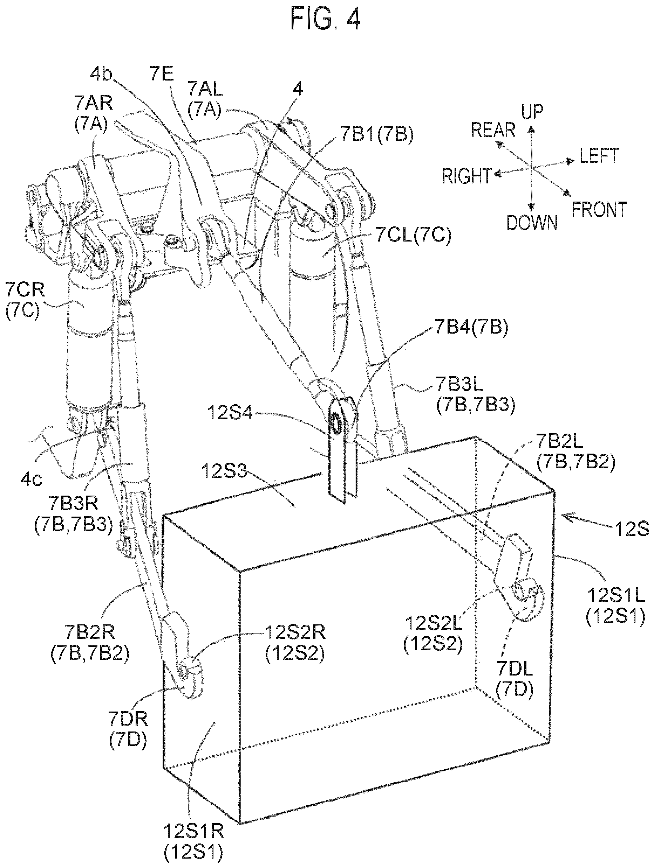

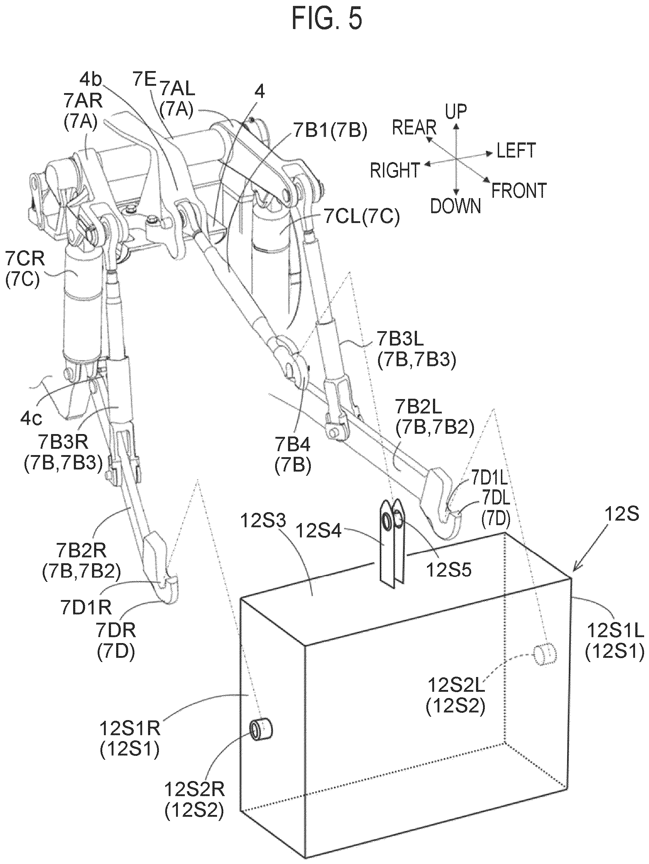

As shown in Figs. 4 and 5, a joint 7B4 that can be coupled to a link bar 12S4 of the sub battery 12S is provided at a front end portion of the top link 7B1. Attachment hooks 7DL and 7DR that can be connected to terminal portions (battery terminal portions) 12S2L and 12S2R of the sub battery 12S are provided at the front end portions of the first lower link 7B2L and the second lower link 7B2R, respectively. The sub battery 12S is connected to the top link 7B1 and the lower link 7B2 via the link bar 12S4 and the terminal portion 12S2. That is, the sub battery 12S is supported at three points by the top link 7B1 and the lower link 7B2 and mounted on the second coupling device 7. By removing the link bar 12S4 and the terminal portion 12S2 in a connected state from the top link 7B1 and the lower link 7B2, the sub battery 12S in a mounted state is separated from the second coupling device 7.

The sub battery 12S has a substantially rectangular parallelepiped casing, and a left side surface 12S1L, a right side surface 12S1R, and a top surface 12S3 are defined in the casing. On the top surface 12S3, the link bar 12S4 extends upward from a substantially central portion. An upper end portion 12S5 of the link bar 12S4 can be connected to the joint 7B4 of the top link 7B1. A battery pack, an electric unit (a relay, a fuse, or the like), cooling means, and the like are provided inside the casing. The battery pack includes a plurality of battery modules. The battery module includes a plurality of cells. The sub battery 12S configured as described above is a battery capable of charging and discharging electric energy, specifically, a lithium ion battery.

On the left side surface 12S1L and the right side surface 12S1R of the casing, the terminal portions 12S2L and 12S2R are provided. The terminal portions 12S2L and 12S2R protrude leftward and rightward from substantially central portions of the left side surface 12S1L and the right side surface 12S1R, respectively. The terminal portions 12S2L and 12S2R are electrically connected to a battery module inside the casing. Each of the terminal portions 12S2L and 12S2R has a substantially cylindrical shape. The attachment hooks 7DL and 7DR include recesses 7D1L and 7D1R recessed downward, and the terminal portions 12S2L and 12S2R can be engaged in the recesses 7D1L and 7D1R. The terminal portion 12S2 and the attachment hook 7D are made of an electrically conductive material, and are electrically connected in an engaged state. Further, the attachment hook 7D is electrically connected to a sub power supply path P2 described below via the lower link 7B2 (see Fig. 6).

Therefore, as shown in Fig. 4, in a case where the sub battery 12S is mounted on the second coupling device 7, the electric energy stored in the sub battery 12S is transmitted from the battery module in the case to the sub power supply path P2 via the terminal portion 12S2L (12S2R), the attachment hook 7DL (7DR), and the lower link 7B2L (7B2R) in this order. On the other hand, as shown in Fig. 5, in a case where the sub battery 12S is separated from the second coupling device 7, the engagement of the terminal portion 12S2 and the attachment hook 7D is released, as a result of which the transmission of the electric energy of the sub battery 12S is also cut off.

The lift cylinder 7C is a hydraulic cylinder. The lift cylinder 7C includes a first lift cylinder 7CL and a second lift cylinder 7CR. One end portion of the first lift cylinder 7CL is connected to the first lift arm 7AL, and the other end portion of the first lift cylinder 7CL is connected to a lower left portion of the front end of the vehicle body 4. One end portion of the second lift cylinder 7CR is connected to the second lift arm 7AR, and the other end portion of the second lift cylinder 7CR is connected to the lower right portion of the front end of the vehicle body 4. By driving the lift cylinder 7C, the first lift arm 7AL and the second lift arm 7AR rotate about the horizontal shaft 7E and swing in the vertical direction. An electromagnetic control valve is connected to the first lift cylinder 7CL and the second lift cylinder 7CR. The electromagnetic control valve can drive (expand and contract) the first lift cylinder 7CL and the second lift cylinder 7CR based on a control signal from the control device 20.

In a state in which the sub battery 12S is mounted on the second coupling device 7, a height of the sub battery 12S and an inclination of the sub battery 12S in the vehicle width direction (a difference between a height of a right portion and a height of a left portion) can be adjusted by driving the lift cylinder 7C. At the time of adjusting the height, both the first lift cylinder 7CL and the second lift cylinder 7CR are similarly driven. At the time of adjusting the inclination, one of the first lift cylinder 7CL and the second lift cylinder 7CR is driven. Specifically, the lift cylinder disposed on a side where the height of the sub battery 12S is small is expanded, or the lift cylinder disposed on a side where the height is large is driven to be contracted.

In this manner, the sub battery 12S mounted on the second coupling device 7 can be lifted and lowered with respect to the tractor 2 and can be adjusted in inclination. Therefore, a position of the center of gravity of the sub battery 12S in the mounted state can be appropriately adjusted. The working device 3 is provided on a rear side of the tractor 2 via the first coupling device 6, and the sub battery 12S is provided on a front side of the tractor 2 via the second coupling device 7, so that a weight balance of the entire working machine 1 can be easily achieved. That is, the sub battery 12S provided on the front side of the tractor 2 also functions as a weight.

In a case of separating the sub battery 12S being mounted in the state shown in Fig. 4, first, the joint 7B4 is separated from the upper end portion 12S5 of the link bar 12S4, and the top link 7B1 is swung upward to be spaced apart from the link bar 12S4. In a state in which the top link 7B1 is spaced apart from the link bar 12S4, the sub battery 12S is lifted upward, and the terminal portions 12S2L and 12S2R are removed from the recesses 7D1L and 7D1R of the attachment hooks 7DL and 7DR. As a result, the terminal portions 12S2L and 12S2R are spaced apart from the first lower link 7B2L and the second lower link 7B2R. Then, the sub battery 12S is separated from the second coupling device 7 by moving the sub battery 12S forward in a state in which the terminal portions 12S2L and 12S2R are spaced apart from the first lower link 7B2L and the second lower link 7B2R, resulting in the state shown in Fig. 5.

In a case of mounting the sub battery 12S being separated in the state shown in Fig. 5, first, the sub battery 12S is lifted while directing the terminal portions 12S2L and 12S2R in a left-right direction and directing the link bar 12S4 upward. The lifted sub battery 12S is moved rearward so as to face the second coupling device 7, and in a state in which the top link 7B1 is swung upward, the sub battery 12S is moved downward such that the terminal portions 12S2L and 12S2R land on the recesses 7D1L and 7D1R of the attachment hooks 7DL and 7DR. The terminal portions 12S2L and 12S2R are engaged with the recesses 7D1L and 7D1R, the top link 7B1 is swung downward, and the joint 7B4 is attached to the upper end portion 12S5 of the link bar 12S4. As a result, the sub battery 12S is mounted on the second coupling device 7, resulting in the state shown in Fig. 4.

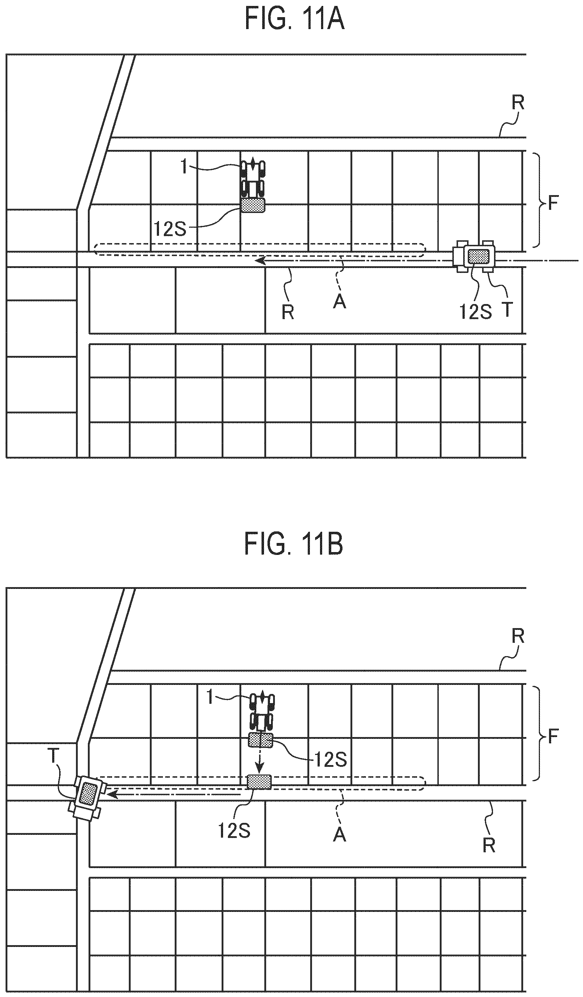

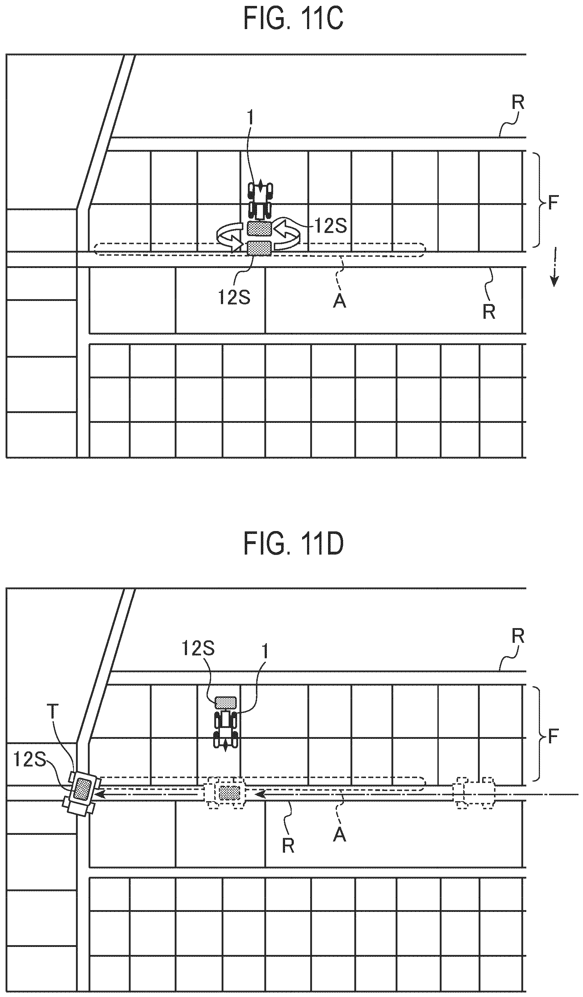

In this manner, the sub battery 12S is attachable to and detachable from the second coupling device 7. Therefore, in a case where a remaining level of the sub battery 12S being mounted has decreased, it is possible to mount a new replacement sub battery 12S after separating the mounted sub battery 12S. That is, the sub battery 12S is replaceable according to the remaining level. A replacement mode of the sub battery 12S will be described below in detail (see Fig. 11).

In the present embodiment, the sub battery 12S is loaded in addition to the main battery 12M. However, a package capable of storing the energy source may be mounted instead of the sub battery 12S. As the package, for example, a hydrogen tank, a liquified petroleum gas (LPG) tank, or the like may be used. In a case where the hydrogen tank is loaded on the second coupling device 7, for example, a fuel cell that generates electric power with hydrogen and oxygen in the air may be mounted on the tractor 2, and hydrogen from the tank may be supplied to the fuel cell. In a case where the LPG tank is loaded on the second coupling device 7, for example, a generator that generates electric power by a gas engine may be mounted on the tractor 2, and gas from the tank may be supplied to the gas engine.

Further, in the present embodiment, the second coupling device 7 is provided at the foremost end portion of the vehicle body 4, and the sub battery 12S is mounted on the front side of the vehicle body 4 via the second coupling device 7, but a mounting position of the sub battery 12S is not limited to the front side of the vehicle body 4.

As shown in Fig. 6, the tractor 2 includes a PTO shaft 19. The PTO shaft 19 transmits power from the electric motor 11 that drives the tractor 2 to the working device 3 and the like. The electric motor 11 is electrically connected to the main battery 12M and the sub battery 12S via an inverter. An output shaft of the electric motor 11 transmits the power to a propulsion shaft 13a. On the other hand, at the time of regeneration, the output shaft of the electric motor 11 serves as an input shaft, and an inertial force during traveling of the tractor 2 is transmitted to the input shaft via a power transmission system. Then, the power transmitted to the input shaft is input to the electric motor 11. As described above, the electric motor 11 also functions as a regeneration device (generator) capable of regenerating electric power from the traveling vehicle 2.

One end of the main power supply path P1 is connected to the main battery 12M, and the other end of the main power supply path P1 is connected to an adjuster 60. One end of the sub power supply path P2 is connected to the terminal portion 12S2 of the sub battery 12S via the attachment hook 7D and the lower link 7B2. The other end of the sub power supply path P2 is connected to the adjuster 60. One end of an electric motor supply path P3 is connected to the electric motor 11, and the other end of the electric motor supply path P3 is connected to the adjuster 60. In actual implementation, an inverter is interposed on a side of the electric motor supply path P3 that is adjacent to the electric motor 11. One end of a working device supply path P4 is connected to a connector 61 described below, and the other end of the working device supply path P4 is connected to the adjuster 60. The main power supply path P1, the sub power supply path P2, the electric motor supply path P3, and the working device supply path P4 are, for example, harnesses or the like.

The adjuster 60 is configured to switch to any one of a discharge mode or a regeneration mode based on a control signal from control device 20. When in the discharge mode, the adjuster 60 receives the electric power from the main battery 12M via the main power supply path P1 and receives the electric power from the sub battery 12S via the sub power supply path P2. The adjuster 60 adjusts a ratio of the received electric power from the main power supply path P1 and the received electric power from the sub power supply path P2 based on a control signal from the control device 20. The electric power received by the adjuster 60 is transmitted to the electric motor supply path P3 and the working device supply path P4. The adjuster 60 adjusts a ratio of the electric power transmitted to the electric motor supply path P3 and the electric power transmitted to the working device supply path P4 based on a control signal from the control device 20.

On the other hand, when in the regeneration mode, the electric power from the electric motor 11 is received via the electric motor supply path P3, and the electric power is transmitted to the main power supply path P1 and the sub power supply path P2 (see arrows with alternating long and short dashes in Fig. 6). The adjuster 60 adjusts a ratio of the electric power transmitted to the main power supply path P1 and the electric power transmitted to the sub power supply path P2 based on a control signal from the control device 20.

The connector 61 is provided in the tractor 2 (vehicle body 4). The connector 61 enables connection to the working device supply path P4 from the outside. The connector 61 is connected to one end portion of the working device supply path P4 on a side opposite to the adjuster 60. The connector 61 is also connected to an in-vehicle network N1 in parallel with the working device supply path P4. The connector 61 is detachably connected to a cable connector 61A. Each of a power supply cable (supply path) 61B connected to an electric motor 50a of the working device 3 and a communication cable (communication path) 61C connected to the working device 3 is connected to the cable connector 61A.

As shown in Fig. 3, the connector 61 is provided at the rear portion of the tractor 2, and is located above a front end portion of the top link 6B1 of the first coupling device 6 and a front end portion of the lift arm 6A. The connector 61 is provided between the first lift arm 6AL and the second lift arm 6AR in the vehicle width direction. When the working device 3 is coupled to the tractor 2, the connector 61 disposed as described above faces the working device 3. In the present embodiment, the connector 61 is provided in the tractor 2, but instead, the connector 61 may be provided in the working device 3, intermediate portions of the power supply cable 61B and the communication cable 61C, or the like.

As shown in Fig. 6, in a state in which the cable connector 61A is connected to the connector 61 and the sub battery 12S is mounted on the second coupling device 7, when in the discharge mode, the electric power discharged from the main battery 12M and the sub battery 12S is supplied to the electric motor 11 of the tractor 2 and the electric motor 50a of the working device 3. More specifically, the electric power of the main battery 12M is supplied to the electric motor 11 via the main power supply path P1, the adjuster 60, and the electric motor supply path P3, and is supplied to the electric motor 50a via the main power supply path P1, the adjuster 60, the working device supply path P4, the connector 61, and the power supply cable 61B. The electric power of the sub battery 12S is supplied to the electric motor 11 via the sub power supply path P2, the adjuster 60, and the electric motor supply path P3, and is supplied to the electric motor 50a via the sub power supply path P2, the adjuster 60, the working device supply path P4, the connector 61, and the power supply cable 61B. The adjuster 60 is interposed in an electric power supply path from the main battery 12M and the sub battery 12S, and the ratio of the received electric power from the main battery 12M and the received electric power from the sub battery 12S is adjusted by the adjuster 60. The electric energy supplied to the electric motor 11 is adjusted by controlling the inverter according to a control signal from the control device 20, and ON/OFF of the electric motor 11 and a rotation speed of the output shaft are controlled.

In a state in which the cable connector 61A is connected to the connector 61 and the sub battery 12S is mounted on the second coupling device 7, when in the regeneration mode, the electric power generated by the electric motor 11 of the tractor 2 is supplied to the main battery 12M and the sub battery 12S. More specifically, the electric power of the electric motor 11 is supplied to the main battery 12M via the electric motor supply path P3, the adjuster 60, and the main power supply path P1, and is supplied to the sub battery 12S via the electric motor supply path P3, the adjuster 60, and the sub power supply path P2. The adjuster 60 is interposed in an electric power supply path from the electric motor 11, and a ratio of the electric power transmitted to the main battery 12M and the electric power transmitted to the sub battery 12S is adjusted by the adjuster 60. The electric energy supplied to the main battery 12M and the sub battery 12S is charged by each battery.

The PTO shaft 19 protrudes rearward from the transmission case 10. The transmission device 13 includes the main shaft (propulsion shaft) 13a, a main transmission unit 13b, an auxiliary transmission unit 13c, a shuttle unit 13d, and a PTO power transmission unit 13e. The propulsion shaft 13a is rotatably supported by a housing case of the transmission device 13. Power from the output shaft of the electric motor 11 is transmitted to the propulsion shaft 13a. The main transmission unit 13b includes a plurality of gears and a shifter that changes connection of the gears. The main transmission unit 13b changes and outputs (shifts) a rotational speed input from the propulsion shaft 13a by appropriately changing connection (meshing) of the plurality of gears with the shifter.

Similarly to the main transmission unit 13b, the auxiliary transmission unit 13c includes a plurality of gears and a shifter that changes connection of the gears. The auxiliary transmission unit 13c changes and outputs (shifts) a rotational speed input from the main transmission unit 13b by appropriately changing connection (meshing) of the plurality of gears with the shifter. The shuttle unit 13d includes a shuttle shaft 16 and a forward/backward switch unit 17. The power output from the auxiliary transmission unit 13c is transmitted to the shuttle shaft 16 via a gear or the like. The rear wheel differential device 14 is provided on the shuttle shaft 16. A rear axle supporting the rear wheels 5R is rotatably supported by the rear wheel differential device 14. The forward/backward switching unit 17 is configured by, for example, a clutch such as a hydraulic clutch or an electric clutch, and switches a rotation direction of the shuttle shaft 16, that is, forward movement and backward movement of the tractor 2, by turning on and off the clutch.

The PTO power transmission unit 13e includes a PTO clutch 18 and the PTO shaft 19. The PTO shaft 19 is rotatably supported, and can transmit the power from the propulsion shaft 13a. The PTO shaft 19 includes a PTO propulsion shaft 19a and a PTO output shaft 19b. The PTO propulsion shaft 19a is connected to the PTO output shaft 19b via a PTO transmission unit 19c. However, the PTO propulsion shaft 19a may be connected to the PTO output shaft 19b without passing through the PTO transmission unit 19c. An output of the PTO output shaft 19b is transmitted to a power transmission mechanism 50 of the working device 3 described below.

The PTO transmission unit 19c can change a rotational speed of the PTO propulsion shaft 19a and transmit the rotation to the PTO output shaft 19b by an operation unit such as a PTO shift lever. The PTO transmission unit 19c includes, for example, a transmission actuator such as an electromagnetic solenoid or an electric motor capable of operating the operation unit based on a control signal from the control device 20. The PTO clutch 18 is a clutch capable of switching between a connected state in which the power of the propulsion shaft 13a is transmitted to the PTO shaft 19 and a disconnected state in which the power of the propulsion shaft 13a is not transmitted to the PTO shaft 19. Specifically, the PTO clutch 18 is provided between the propulsion shaft 13a and the PTO propulsion shaft 19a. The PTO clutch 18 is configured by a hydraulic clutch, an electric clutch, or the like, and can switch between a state in which the power of the propulsion shaft 13a (the power of the electric motor 11) is transmitted to the PTO shaft 19 and a state in which the power of the propulsion shaft 13a is not transmitted to the PTO shaft 19 by being turned on and off.

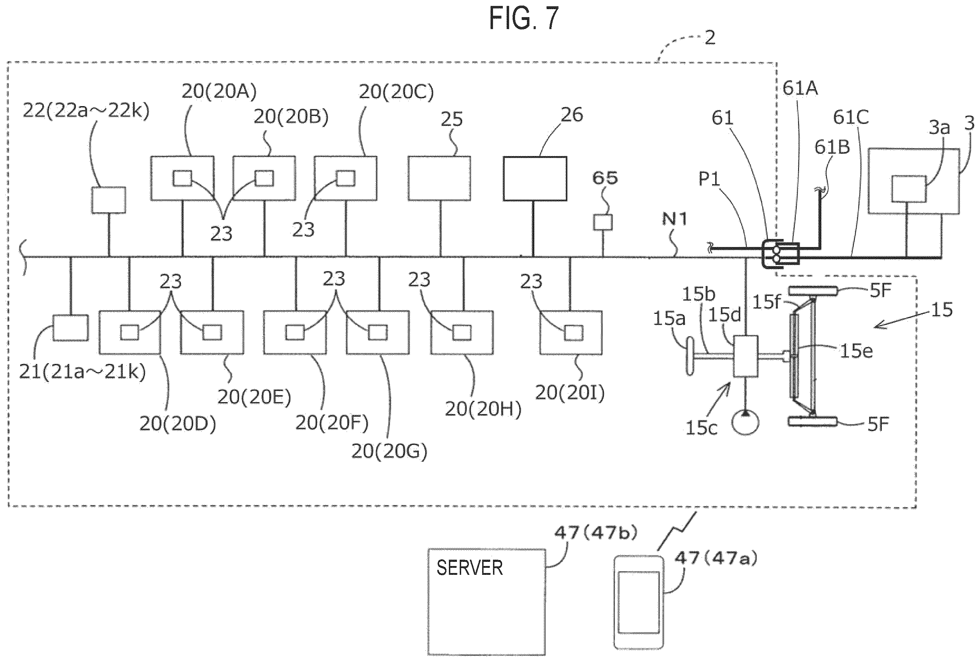

As shown in Fig. 7, the tractor 2 includes a steering device 15. The steering device 15 includes a steering wheel 15a, a rotation shaft (steering shaft) 15b that rotates with the rotation of the steering wheel 15a, and an assist mechanism (power steering mechanism) 15c that assists the steering of the steering wheel 15a. The assist mechanism 15c includes a control valve 15d and a steering cylinder 15e. The control valve 15d is, for example, a three-position switching valve that can be switched by movement of a spool or the like. The control valve 15d can also be switched by steering of the steering shaft 15b. The steering cylinder 15e is connected to an arm (knuckle arm) 15f that changes an orientation of the front wheel 5F. Therefore, when the steering wheel 15a is operated, a switching position and an opening degree of the control valve 15d are switched according to the steering wheel 15a, and a steering direction of the front wheel 5F can be changed by expanding and contracting the steering cylinder 15e to the left or right according to the switching position and the opening degree of the control valve 15d. Note that the steering device 15 described above is an example, and is not limited to the above-described configuration.

As shown in Fig. 7, the tractor 2 includes a plurality of detection devices 21. The plurality of detection devices 21 are devices that detect a state of the tractor 2, and include, for example, a water temperature sensor 21a that detects a water temperature, a main battery sensor 21b that detects a voltage of the main battery 12M, a motor rotation sensor 21c that detects a rotation speed of the electric motor 11, an accelerator pedal sensor 21d that detects an operation amount of an accelerator pedal, a steering angle sensor 21e that detects a steering angle of the steering device 15, an angle sensor 21f that detects angles of the lift arms 6A and 7A, an inclination detection sensor 21g that detects an inclination of the vehicle body 4 in the width direction (rightward or leftward), a speed sensor 21h that detects a vehicle speed (speed) of the vehicle body 4, a PTO rotation sensor 21i that detects a rotation speed of the PTO shaft 19, a sub battery sensor 21j that detects a voltage of the sub battery 12S, a positioning sensor (positioning device) 21k that detects a position of the vehicle body 4 based on a signal of a positioning satellite or the like, or the like.

The positioning device 21k can detect its own position (positioning information including latitude and longitude) by a satellite positioning system (positioning satellite) such as D-GPS, GPS, GLONASS, BeiDou, Galileo, or Michibiki. That is, the positioning device 21k receives a satellite signal (a position of the positioning satellite, a transmission time, correction information, or the like) transmitted from the positioning satellite, and detects a position (for example, latitude and longitude) of the tractor 2, that is, the position of the vehicle body 4, based on the satellite signal. The positioning device 21k includes a reception device and an inertial measurement unit (IMU). The reception device is a device that includes an antenna or the like and receives the satellite signal transmitted from the positioning satellite, and is attached to the vehicle body 4 separately from the inertial measurement unit. In the embodiment, the reception device is attached to the vehicle body 4. Note that an attachment location of the reception device is not limited to that in the embodiment.

The inertial measurement unit includes an acceleration sensor that detects an acceleration, a gyro sensor that detects an angular velocity, and the like, and is provided on a lower side of the vehicle body 4, for example, the driver seat 4a. The inertial measurement unit can detect a roll angle, a pitch angle, a yaw angle, and the like of the vehicle body 4. The speed sensor 21h detects the vehicle speed by converting, for example, a rotation speed of an axle of the front wheels 5F, the rotation speed of the axle of the front wheels 5F, a rotation speed of the front wheels 5F, a rotation speed of the rear wheels 5R, and the like into the vehicle speed. The speed sensor 21h can also detect a rotation direction of any one of the axle of the front wheels 5F, the axle of the rear wheels 5R, the front wheels 5F, and the rear wheels 5R, and can also detect whether or not the tractor 2 (vehicle body 4) is moving forward or backward. The above-described detection device 21 is an example, and is not limited to the above-described sensor.

The tractor 2 also includes a plurality of operation members 22. The plurality of operation members 22 include a shuttle lever 22a that switches forward movement or backward movement of the vehicle body 4, an ignition switch 22b that starts the prime mover 11 and the like, a PTO shift lever 22c that sets the rotation speed of the PTO shaft 19, a shift changeover switch 22d that switches between automatic shift and manual shift, a shift lever 22e that manually switches a shift stage (shift level) of the transmission device 13, an accelerator 22f that increases or decreases the vehicle speed, a pump switch 22g that operates lifting and lowering of the coupling device 6, a height setting dial 22h that sets an upper limit of an operation of the coupling device 6, a vehicle speed lever 22i that sets the vehicle speed, a hydraulic operation tool 22j, a rotation setting tool 22k that sets an upper limit of a rotation speed of the prime mover rotation, and the like.

Setting tools such as the shift changeover switch 22d, the height setting dial 22h, and the rotation setting tool 22k are provided in a console box provided on a side of the driver seat 4a. An operation of the vehicle body 4 can be set by the driver operating the setting tool (the shift changeover switch 22d, the height setting dial 22h, or the rotation setting tool 22k). Note that the above-described operation member 22 is an example, and is not limited to the above-described configuration.

As shown in Fig. 7, the tractor 2 includes a plurality of control devices 20. The control device 20 is a device that performs various controls of the tractor 2, and is a central processing unit (CPU), an electric/electronic circuit, or the like. The control device 20 includes a storage device 23 that stores various information such as a control program, identification information, and the like. The storage device 23 is configured by a nonvolatile memory or the like. That is, the plurality of control devices 20 are electrical components including the storage device 23.

The plurality of control devices 20 include a shift control device 20A, a motor control device 20B, a PTO control device 20C, a lifting/lowering control device 20D, an automatic steering control device 20E, a first pose control device 20F, a battery charge/discharge control device (a charge control unit and a discharge control unit) 20G, an automated traveling control unit 20H, and a second pose control device 20I. Note that the control device 20 does not need to include all of the shift control device 20A, the motor control device 20B, the PTO control device 20C, the lifting/lowering control device 20D, the automatic steering control device 20E, the first pose control device 20F, the battery charge/discharge control device 20G, the automated traveling control unit 20H, and the second pose control device 20I, and may be provided according to a specification of the tractor.

In addition, the shift control device 20A, the motor control device 20B, the PTO control device 20C, the lifting/lowering control device 20D, the automatic steering control device 20E, the pose control device 20F, the battery charge/discharge control device 20G, the automated traveling control unit 20H, and the second pose control device 20I may be provided in an integrated control device. The shift control device 20A performs shift control. In the shift control, in a case where an automatic shift function is enabled, any one of the main transmission unit 13b or the auxiliary transmission unit 13c is automatically switched according to the state of the tractor 2, and the shift stage (shift level) of the transmission device 13 is automatically changed to a predetermined shift stage (shift level). In the shift control, in a case where the shift changeover switch 22d is switched to the manual shift, any one of the main transmission unit 13b or the auxiliary transmission unit 13c is automatically switched according to the shift stage (shift level) set by the shift lever 22e to change the shift stage of the transmission device 13.

The shift control device 20A performs control (travel switching control) in a travel driving state (an operation of the traveling device 5) of the traveling device 5. In the travel switching control, in a case where shuttle lever 22a is operated to switch to forward movement, the forward/backward switching unit 17 of shuttle unit 13d is switched to forward movement to move the vehicle body 4 forward. In the travel switching control, in a case where the shuttle lever 22a is operated to switch to backward movement, the forward/backward switching unit 17 of shuttle unit 13d is switched to backward movement to move the vehicle body 4 backward.

The motor control device 20B controls the electric motor 11 by inverter control. In the electric motor control, in a case where the ignition switch 22b is operated to be turned on, the electric motor 11 is started through predetermined processing, and in a case where the ignition switch 22b is operated to be turned off, the driving of the electric motor 11 is stopped. In the electric motor control, in a case where the accelerator 22f is operated, the vehicle speed (speed) of the vehicle body 4 is changed by controlling the inverter to change the rotation speed of the electric motor 11 according to an operation amount of the accelerator 22f.

The PTO control device 20C performs PTO control. In the PTO control, in a case where the PTO shift lever 22c is operated, the rotational speed (PTO rotational speed) of the PTO propulsion shaft 19a is changed by switching a PTO shift gear of the PTO transmission unit 19c.

The lifting/lowering control device 20D performs lifting/lowering control in the first coupling device 6. In the lifting/lowering control, in a case where a manual lifting/lowering function is enabled and the pump switch 22g is operated in a lifting direction (lifting side), a control valve is controlled to expand the shift cylinder 6C and lift a rear end portion (an end portion adjacent to the working device 3) of the lift arm 6A. In the lifting/lowering control, in a case where the manual lifting/lowering function is enabled and the pump switch 22g is operated in a lowering direction (lowering side), the control valve is controlled to contract the shift cylinder 6C and lower the rear end portion (the end portion adjacent to the working device 3) of the lift arm 6A. In a case where the working device 3 is lifted by the coupling device 6, when a position of the working device 3, that is, an angle of the lift arm 6A, reaches an upper limit (height upper limit value) set by the height setting dial 22h, the lifting operation in the first coupling device 6 is stopped.

In the lifting/lowering control, in a case where a backup function is enabled, the control valve is automatically controlled when the vehicle body 4 moves backward to expand the shift cylinder 6C and lift the rear end portion (the end portion adjacent to the working device 3) of the lift arm 6A. In the lifting/lowering control, in a case where an auto-up function is enabled and the steering angle of the steering device 15 becomes equal to or greater than a predetermined value, the control valve is automatically controlled to expand the shift cylinder 6C and lift the rear end portion (the end portion adjacent to the working device 3) of the lift arm 6A.

The automatic steering control device 20E performs automatic steering control. In the automatic steering control, in a case where a driving changeover switch 65 described below is operated to be turned on, the steering device 15 is automatically controlled to change the steering direction of the front wheel 5F such that the vehicle body 4 travels along a set scheduled travel route.

The first pose control device 20F performs pose control by adjusting the position of the working device 3. In the pose control, in a case of adjusting the height of the working device 3, lengths of both the first lift cylinder 6CL and the second lift cylinder 6CR are fixed to predetermined lengths by outputting a control signal to a control valve. In the pose control, in a case of adjusting the inclination in the vehicle width direction (the difference between the height of the right portion and the height of the left portion), any one of the first lift cylinder 6CL and the second lift cylinder 6CR is driven by outputting a control signal to the control valve.

The battery charge/discharge control device 20G controls discharge/charge of the main battery 12M and the sub battery 12S. The battery charge/discharge control device 20G switches the adjuster 60 to any one of the discharge mode and the regeneration mode. In the discharge mode, the battery charge/discharge control device 20G switches to the regeneration mode in a case where the battery charge/discharge control device 20G determines that electric power regeneration is performed from the electric motor 11 based on the operation amount of the accelerator pedal, the rotation speed of the electric motor 11, and the like. In addition, in the regeneration mode, the battery charge/discharge control device 20G switches to the discharge mode in a case where the battery charge/discharge control device 20G determines that electric power supply to the electric motor 11 is necessary based on the operation amount of the accelerator pedal, the rotation speed of the electric motor 11, and the like.

In the discharge mode, the battery charge/discharge control device 20G switches the adjuster 60 to any one of a first discharge mode and a second discharge mode. The ratio of the received electric power from the main power supply path P1 and the received electric power from the sub power supply path P2 is different between the first discharge mode and the second discharge mode. In the first discharge mode, the battery charge/discharge control device 20G controls the adjuster 60 such that the received electric power from the sub power supply path P2 is greater than the received electric power from the main power supply path P1. That is, in the first discharge mode, a discharge amount from the sub battery 12S is larger than a discharge amount from the main battery 12M. In the second discharge mode, the battery charge/discharge control device 20G controls the adjuster 60 such that the received electric power from the main power supply path P1 is greater than the received electric power from the sub power supply path P2. That is, in the second discharge mode, the discharge amount from the main battery 12M is larger than the discharge amount from the sub battery 12S. In the first discharge mode, the battery charge/discharge control device 20G switches the adjuster 60 to the second discharge mode in a case where the battery charge/discharge control device 20G determines that the remaining level of the main battery 12M is higher than the remaining level of the sub battery 12S and a difference between the remaining levels is equal to or larger than a predetermined value. In the second discharge mode, the battery charge/discharge control device 20G switches the adjuster 60 to the first discharge mode in a case where the battery charge/discharge control device 20G determines that the remaining level of the sub battery 12S is higher than the remaining level of the main battery 12M and that a difference between the remaining levels is equal to or larger than a predetermined value.

In the regeneration mode, the battery charge/discharge control device 20G switches the adjuster 60 to any one of a first regeneration mode and a second regeneration mode. The ratio of the electric power transmitted to the main power supply path P1 and the electric power transmitted to the sub power supply path P2 is different between the first regeneration mode and the second regeneration mode. In the first regeneration mode, the battery charge/discharge control device 20G controls the adjuster 60 such that the electric power transmitted to the sub power supply path P2 becomes zero, and entire electric power received by the adjuster 60 is transmitted to the main power supply path P1. That is, in the first regeneration mode, a charge amount of the main battery 12M is larger than a charge amount of the sub battery 12S. In the second regeneration mode, the battery charge/discharge control device 20G controls the adjuster 60 such that the electric power transmitted to the main power supply path P1 becomes zero, and entire electric power received by the adjuster 60 is transmitted to the sub power supply path P2. That is, in the second regeneration mode, the charge amount of the sub battery 12S is larger than the charge amount of the main battery 12M. In the first regeneration mode, the battery charge/discharge control device 20G switches the adjuster 60 to the second regeneration mode in a case where the battery charge/discharge control device 20G determines that the remaining level of the main battery 12M is equal to or higher than a predetermined value. In the second regeneration mode, the battery charge/discharge control device 20G switches the adjuster 60 to the first discharge mode in a case where the battery charge/discharge control device 20G determines that the remaining level of the main battery 12M is lower than a predetermined value.

In the present embodiment, the remaining level of the main battery 12M is calculated based on the voltage or the like of the main battery 12M detected by the main battery sensor 21b. The remaining level of the sub battery 12S is calculated based on the voltage or the like of the sub battery 12S detected by the sub battery sensor 21j.

More specifically, a remaining level (theoretical remaining level) Q4 of the main battery 12M at a predetermined position in the farm field can be obtained based on an initial remaining level Q1 of the main battery 12M at the start of traveling, a battery consumption amount Q2 of the main battery 12M, and a charge amount Q3 of the main battery 12M by regeneration. The initial remaining level Q1 (unit: kJ) is calculated based on, for example, the detected voltage of the main battery 12M. The battery consumption amount Q2 (unit: kJ) is obtained based on, for example, a value obtained by multiplying a traveling distance in a case where the tractor travels on a travel route of the farm field by a work load per unit distance, and an electric power reception ratio in the adjuster 60. The charge amount Q3 (unit: kJ) is calculated based on, for example, the rotation speed of the electric motor 11, the vehicle speed, an electric power transmission ratio in the adjuster 60, and the like. The remaining level Q4 of the main battery 12M is obtained by adding the charge amount Q3 to a value obtained by subtracting the battery consumption amount Q2 from the initial remaining level Q1. The remaining level (theoretical remaining level) of the sub battery 12S is also obtained in the same manner as described above.

The driving changeover switch 65 is connected to the tractor 2. The driving changeover switch 65 is a switch that can be switched to be turned on and off, and can set the automated traveling control unit 20H to an automated driving mode when being turned on, and can set the automated traveling control unit 20H to a manual driving mode when being turned off. The automated traveling control unit 20H controls automated driving of the vehicle body 4. The automated traveling control unit 20H starts the automated driving in the automated driving mode. In the control of the automated driving, the steering angle of the steering device 15 is changed based on a deviation between the position of the vehicle body 4 and the set scheduled travel route. The setting of the steering angle in the automated driving in the above-described embodiment is an example and is not limited. In a case where the scheduled travel route and the vehicle speed are associated with each other, the automated traveling control unit 20H automatically changes the shift stage of the transmission device 13, the rotation speed of the electric motor 11, and the like such that the current vehicle speed of the tractor 2 matches the vehicle speed corresponding to the scheduled travel route.

The second pose control device 20I performs pose control by adjusting the position of the sub battery 12S. In the pose control, in a case of adjusting the height of the sub battery 12S, lengths of both the first lift cylinder 7CL and the second lift cylinder 7CR are fixed to predetermined lengths by outputting a control signal to a control valve. In the pose control, in a case of adjusting the inclination in the vehicle width direction (the difference between the height of the right portion and the height of the left portion), any one of the first lift cylinder 7CL and the second lift cylinder 7CR is driven by outputting a control signal to the control valve.

The tractor 2 includes a communication device 26. The communication device 26 is a communication device (communication module) that performs any one of direct communication and indirect communication with an external device 47, and can perform radio communication by, for example, wireless fidelity (Wi-Fi) (registered trademark) of the IEEE 802.11 series which is a communication standard, Bluetooth (registered trademark) low energy (BLE), low power wide area (LPWA), low-power wide-area network (LPWAN), or the like. Furthermore, the communication device 26 may be a communication device (communication module) that performs radio communication by a mobile phone communication network, a data communication network, or the like.

The external device 47 is, for example, a portable type terminal (portable terminal) 47a such as a tablet, a smartphone, or a personal digital assistant (PDA), or a fixed type terminal (fixed terminal) 47b such as a fixed type computer such as a personal computer or a server. The tractor 2 includes a display device 25. The display device 25 is a device that displays various information regarding the tractor 2. The display device 25 is installed in the vicinity of the driver seat 4a, so that the driver can confirm a displayed content. The display device 25 is a meter panel device that displays driving information, an auxiliary panel device that performs various settings related to the working machine, and the like.

The tractor 2 (vehicle body 4) includes the in-vehicle network N1. The in-vehicle network N1 is a network such as a controller area network (CAN), a local interconnect network (LIN), media oriented system transport (MOST), FlexRay, or ISO11783 (ISOBUS). The plurality of control devices 20, the plurality of detection devices 21, the plurality of operation members 22, the communication device 26, and the display device 25 are connected to the in-vehicle network N1.

As shown in Figs. 3, 6, and 7, the connector 61 provided on the rear side of the tractor 2 (vehicle body 4) enables connection from the outside to the in-vehicle network N1. The communication cable 61C connects the tractor 2 and the spreading device 3. One end portion of the communication cable 61C is connected to the cable connector 61A, and the other end portion of the communication cable 61C is connected to the working device 3. The power supply cable 61B connects the tractor 2 and the spreading device 3. One end portion of the power supply cable 61B is connected to the cable connector 61A, and the other end portion of the power supply cable 61B is connected to the electric motor 50a of the spreading device 3. In this manner, the cable connector 61A aggregates one end portions of the power supply cable 61B and the communication cable 61C.

The connector 61 and the cable connector 61A are attachable to and detachable from each other. Shapes of the connector 61 and the cable connector 61A are not limited as long as the power supply cable 61B and the communication cable 61C are attachable and detachable. For example, the connector 61 may include a power supply male pin connected to a terminal end of the working device supply path P4 and a communication male pin connected to a terminal end of the in-vehicle network N1, and the cable connector 61A may include a power supply female pin connected to one end portion of the power supply cable 61B and a communication female pin connected to one end portion of the communication cable 61C. In the connector 61 and the cable connector 61A, the male pins and female pins may be provided in a reverse way.

When the connector 61 and the cable connector 61A are mounted on each other, the power supply male pin and the power supply female pin are connected to each other, and the communication male pin and the communication female pin are connected to each other. Accordingly, the electric energy can be supplied from the working device supply path P4 to the electric motor 50a of the spreading device 3 via the connector 61, and a communication signal can be transmitted between the tractor 2 and the working device 3. On the other hand, when the connector 61 and the cable connector 61A are separated from each other, the connection between the power supply male pin and the power supply female pin and the connection between the communication male pin and the communication female pin are released. As a result, the supply of the electric energy from the working device supply path P4 to the electric motor 50a of the spreading device 3 via the connector 61 is cut off, and the transmission of the communication signal between the tractor 2 and the working device 3 is cut off. In a state in which the cable connector 61A is separated from the connector 61, the connector 61 may be closed by a lid body.

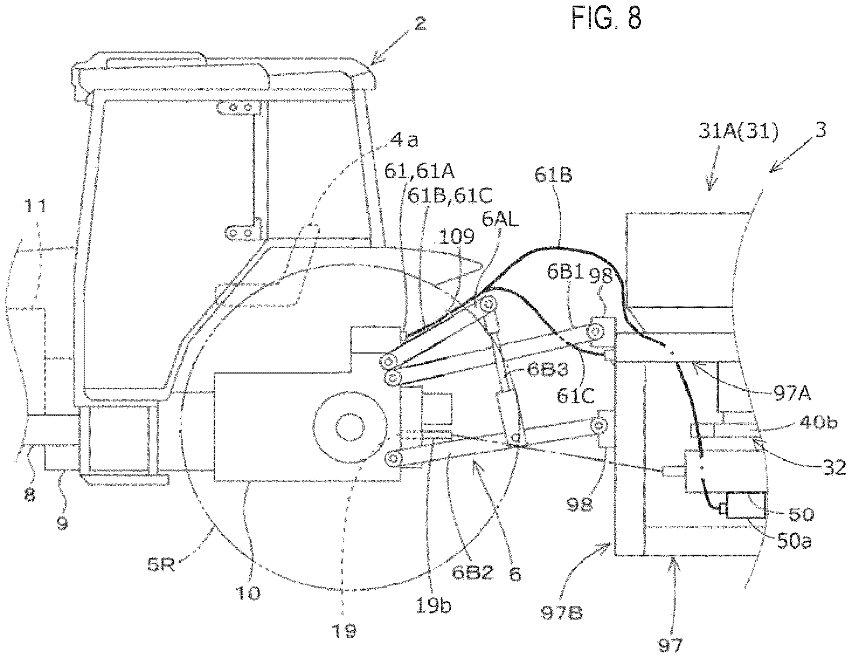

As shown in Figs. 3 and 8, the power supply cable 61B and the communication cable 61C may be bound by a binding tool 109 so as to be integrated with each other on a side adjacent to the cable connector 61A, and may be branched from each other while extending rearward from the cable connector 61A. The power supply cable 61B and the communication cable 61C may be integrally routed at a bound portion, and may be separately routed behind a branch portion. For example, the bound portion of the power supply cable 61B and the communication cable 61C is routed toward the working device 3 through above the first coupling device 6 (above the top link 6B1). Behind the branch portion of the power supply cable 61B and the communication cable 61C, the routing is separately adjusted according to connection positions of the electric motor 50a and a communication system in the working device 3.

### <Working Device>

The working device 3 is a device that performs the agricultural work. In other words, the working device 3 is a device that performs work on the farm field. The working device 3 is driven by transmission of the power from the PTO shaft 19 of the tractor 2 and the power from the electric motor 50a of the working device 3. Specifically, as the working device 3, a spreading device that spreads a spread object in the farm field, a seeding device that sows seeds in the farm field, a shaping device (baler) that gathers and shapes harvested crops (grass or the like), and the like are suitably used. As the spreading device, a fertilizer spreading device (spreader) for spreading a fertilizer to the farm field, a chemical spreading device (sprayer) for spreading a chemical (chemical solution) to the farm field, or the like is used. As the seeding device, for example, a seeder such as a drill seeder for row planting, a planter for sowing seeds at regular intervals, or the like is used. In the present embodiment, since the working device 3 is the spreading device, the working device 3 will be described below as the spreading device 3.

As shown in Figs. 1 and 2, the spreading device 3 includes a housing unit 31 and a spreading unit 32. The housing unit 31 stores the spread object (a fertilizer, a pesticide, or the like) to be spread to the farm field. The housing unit 31 is configured by a hopper having a substantially inverted pyramid shape. The hopper includes a first hopper 31A and a second hopper 31B. The first hopper 31A is disposed on one side (left side) in the vehicle width direction. The second hopper 31B is disposed on the other side (right side) in the vehicle width direction. However, the number of hoppers is not limited. The housing unit 31 has an inlet for the spread object at an upper end and has an outlet for discharging the spread object at a lower end. The number of outlets is not limited, and is set according to the number of rotating bodies (disks) 40 described below in the present embodiment. Specifically, the number of rotating bodies 40 is two, and the number of outlets is also two. Note that the number of rotating bodies 40 may be two, and the number of outlets may be one.

The spreading unit 32 is a working unit of the working device 3, and performs the agricultural work (spreading of the spread object such as a fertilizer or a chemical) by rotating. The spreading unit 32 spreads the spread object stored in the housing unit 31. As shown in Fig. 1, the spreading unit 32 is provided below the housing unit 31. The spreading unit 32 includes at least two or more spreading units. It is preferable that at least two or more spreading units have different spreading directions, but the at least two or more spreading units may include spreading units having the same spreading direction.

As shown in Fig. 2, the spreading unit 32 includes a first spreading unit 321 and a second spreading unit 322. That is, in the present embodiment, the number of spreading units 32 is two. However, the number of spreading units 32 is not limited to two, and may be three or more. The number of spreading units 32 and the number of rotating bodies 40 are the same as each other. The first spreading unit 321 and the second spreading unit 322 are provided side by side in the vehicle width direction. Hereinafter, the two spreading units (the first spreading unit 321 and the second spreading unit 322) will be described.

The first spreading unit 321 is disposed on one side (left side) in the vehicle width direction. The second spreading unit 322 is disposed on the other side (right side) in the vehicle width direction. The first spreading unit 321 includes a first rotating body 410 and a shutter device. The first rotating body 410 has a disk shape and rotates about a central axis 40a extending in a longitudinal direction (vertical direction). As shown in Fig. 8, a plurality of rotating blades (blade members) 40b are attached to an upper surface of the first rotating body 410. The rotating blade 40b rotates about the central axis 40a together with the first rotating body 410. The plurality of rotating blades 40b are disposed at intervals in a circumferential direction, and extend radially outward from the vicinity of the central axis 40a. As the first rotating body 410 rotates about the central axis 40a, the rotating blades 40b hits and radially scatters the spread object falling from the outlet below the housing unit 31 outward (radially outward). An opening area of the outlet can be changed by a shutter. As a result, a spread amount of the spread object by the first spreading unit 321 is adjusted. The second spreading unit 322 has the same configuration, and the spread amount of the spread object is adjusted.

As shown in Fig. 2, the first rotating body 410 and the second rotating body 420 are provided side by side in the vehicle width direction and rotate in directions different from each other. In the present embodiment, the first rotating body 410 rotates in a clockwise direction and the second rotating body 420 rotates in a counterclockwise direction in plan view as indicated by black arrows in Fig. 2. The first rotating body 410 is disposed below the outlet of the housing unit 31. The spread object falling from the outlet is spread by the rotating first rotating body 410. The second rotating body 420 is disposed below the outlet of the housing unit 31. The spread object falling from the outlet is spread by the rotating second rotating body 420. In the present embodiment, the spreading directions of the first spreading unit 321 and the second spreading unit 322 are different from each other. The spreading direction of the first spreading unit 321 is one side in the vehicle width direction and the rear side. The spreading direction of the second spreading unit 322 is the other side in the vehicle width direction and the rear side. In the present embodiment, the main spreading direction of the first spreading unit 321 is the left side and a rear left side, and the main spreading direction of the second spreading unit 322 is the right side and a rear right side as indicated by outlined arrows in Fig. 2. Note that the direction indicated by the outlined arrow is the main spreading direction, and in actual implementation, spreading is performed in a fan shape including the direction indicated by the outlined arrow.

As shown in Figs. 1 and 8, the spreading device 3 includes the power transmission mechanism 50. The power transmission mechanism 50 includes an input/output shaft, a gear, and the like, receives the power supplied from the electric motor 11 and the electric motor 50a, and transmits the input power to the spreading unit 32. Specifically, as shown in Fig. 6, the power transmission mechanism 50 receives the power from the electric motor 11 of the tractor 2 via the PTO shaft 19 (PTO output shaft 19b). The power transmission mechanism 50 receives the power from the electric motor 50a of the spreading device 3 via a motor output shaft 50b. In the power transmission mechanism 50, the input power of the PTO output shaft 19b and the motor output shaft 50b is transmitted to the first rotating body 410 and the second rotating body 420 through integration and shifting. That is, the first rotating body 410 and the second rotating body 420 can be rotated by the power from the electric motor 11 and the electric motor 50a. In addition, rotational speeds of the first rotating body 410 and the second rotating body 420 can be changed by a transmission unit of the power transmission mechanism 50. The housing unit 31, the spreading unit 32, and the power transmission mechanism 50 configured as described above are supported by a frame 97.

As shown in Fig. 8, the spreading device 3 includes the frame 97. However, a configuration of the frame 97 is not limited to the shown configuration. In the following description, directions related to the frame 97 (up, down, front, rear, left, and right) are based on a state in which the spreading device 3 is coupled to the rear portion of the tractor 2. The frame 97 includes an upper frame 97A, a lower frame 97B, and a coupling portion 98.

As shown in Figs. 2 and 8, the upper frame 97A is a frame that supports the housing unit 31, and is located above the spreading unit 32. The upper frame 97A is formed in a substantially rectangular frame shape in plan view. The housing unit 31 (the first hopper 31A and the second hopper 31B) is installed in the upper frame 97A. The lower frame 97B is disposed below the upper frame 97A. The spreading unit 32 (the first spreading unit 321 and the second spreading unit 322) and the power transmission mechanism 50 are supported by the lower frame 97B via a bracket so as to be located in a hollow portion having the substantially rectangular frame shape. The coupling portion 98 is provided at a position corresponding to a rear end portion of the three-point link mechanism 6B (the top link 6B1, the first lower link 6B2L, and the second lower link 6B2R) of the coupling portion 6 at a front end portion of the frame 97. The coupling portion 98 is detachably coupled to the first coupling device 6 provided at the rear portion of the tractor 2. By coupling the coupling portion 98 to the first coupling device 6, the spreading device 3 is detachably coupled to the rear portion of the tractor 2.

As shown in Fig. 7, the spreading device 3 includes a work control device 3a. The work control device 3a is a device that performs various controls of the spreading device 3, and is a CPU, an electric/electronic circuit, or the like. The work control device 3a includes a storage device that stores various information such as a control program, identification information, and the like. The storage device is configured by a nonvolatile memory or the like. The work control device 3a is connected to the in-vehicle network N1 via the communication cable 61C and the connector 61 connecting the spreading device 3 and the tractor 2. As a result, a communication signal can be transmitted and received between the tractor 2 and the spreading device 3.

### <Battery Replacement and Battery Delivery/Collection>

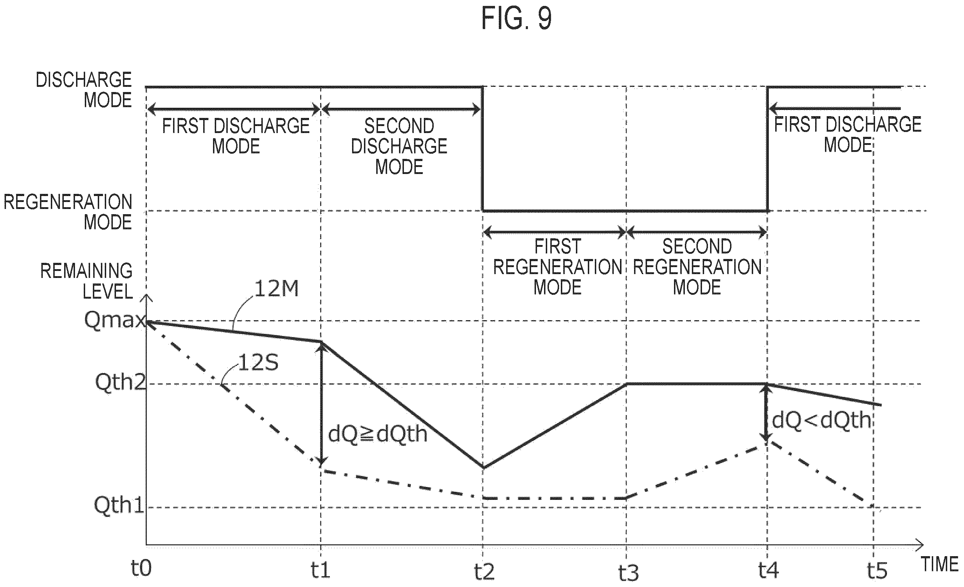

In general, when stored electric energy of the battery is used up, the traveling vehicle body stops. For this reason, it is necessary to transport a replenishment (replacement) battery to the position of the working machine, which may deteriorate overall working efficiency. In the present embodiment, since the electric motor 11 is driven by the main battery 12M and the sub battery 12S as described above, as the work in the farm field progresses, the remaining levels of the main battery 12M and the sub battery 12S being mounted decrease (see the discharge mode in Fig. 9). The sub battery 12S is replaced for electric energy replenishment. In order to suppress the deterioration of the working efficiency, the replacement of the sub battery 12S is preferably performed at an appropriate place and timing. On the other hand, since a material in the working device also tends to be similar, material replenishment may be performed in an area A that is outside a work area of a farm field F and is in contact with an agricultural road R as shown in Fig. 11. In this case, the area A can also be used as an area for replacement of the sub battery 12S.

In the farm field F, the delivery of the replenishment (replacement) sub battery 12S and the collection of the used sub battery 12S are performed as follows so that the replacement of the sub battery 12S in the "area A that is in contact with the agricultural road R" can be implemented. In the present embodiment, it is assumed that the sub battery 12S that is not mounted is stored in a delivery base (delivery center) away from the farm field F. In the delivery base, it is possible to store the replacement sub battery 12S to be delivered toward the farm field F, or to charge the used sub battery 12S collected in the farm field F. The delivery of the replacement sub battery 12S and the collection of the used sub battery 12S are performed by a transport vehicle such as a truck that can be loaded with and transport the sub battery 12S. The replacement sub battery 12S is a battery that is sufficiently charged, for example, a battery whose charge amount is 80% or more in a case where the maximum charge amount of the battery is 100%. Note that the charge amount is not limited to 80% or more.

In a case of delivering the replacement sub battery 12S to the farm field F, for example, the replacement sub battery 12S stored in the delivery base is loaded on a transport vehicle T, and as shown in Fig. 11(a), the transport vehicle T travels from the delivery base toward the farm field F and reaches the area A of the farm field F that is in contact with the agricultural road R. Then, as shown in Fig. 11(b), in the area A (for example, an area for material replenishment), the sub battery 12S loaded on the transport vehicle T is unloaded as the replacement sub battery 12S. On the other hand, as shown in Fig. 11(c), the sub battery 12S separated from the working machine 1 is left as the used sub battery 12S in the area A, and the replacement sub battery 12S that has already been left is mounted on the working machine 1. Note that the transport vehicle T after unloading moves to another farm field and collects another battery, and then returns to the delivery base.

In a case of collecting the used sub battery 12S from the area A, as shown in Fig. 11(d), the used sub battery 12S that has been left is loaded on the transport vehicle T that has reached the area A via the agricultural road R, and the transport vehicle T travels toward the delivery base. The unloading of the sub battery 12S from the transport vehicle T and the loading of the sub battery 12S on the transport vehicle T may be performed by a driver of the transport vehicle T. The separation of the mounted sub battery 12S from the working machine 1 and the mounting of the replacement sub battery 12S on the working machine 1 may be performed by the driver of the tractor, or may be performed by the driver of the transport vehicle T as a service of the delivery base.

In order to enable the delivery of the sub battery 12S and the collection of the sub battery 12S described above, a computer is installed in the delivery base (delivery center). The computer and the communication device 26 of the working machine (tractor) 1 can communicate with each other via a network or the like. The computer of the delivery base (delivery center) acquires various information (hereinafter, referred to as delivery information) regarding delivery, and controls various equipment and devices installed in the delivery base (delivery center) based on the acquired delivery information. The delivery information includes an instruction signal (request signal) for requesting delivery of the sub battery 12S, an instruction signal (collection signal) for requesting collection of the sub battery 12S, a vehicle body position of the working machine (tractor) 1, and the like. The request signal, the collection signal, and the vehicle body position are transmitted from the communication device 26 of the working machine (tractor) 1, for example, and are received (acquired) by the computer of the delivery base (delivery center).

More specifically, during operation of the working machine 1, when the control device 20 determines that the remaining level of the sub battery 12S being mounted is lower than a predetermined value and replacement of the sub battery 12S being mounted is necessary, the control device 20 instructs the communication device 26 to transmit the request signal and the vehicle body position, and the communication device 26 transmits the request signal and a vehicle body signal to the computer (delivery base). The computer in the delivery base that has received the request signal and the vehicle body position displays information indicating that "there is a battery delivery request" and the vehicle body position on a monitor or the like of the computer. At the delivery base, an operator confirms the above displayed information, and instructs a delivery driver to move toward the farm field corresponding to the vehicle body position and deliver the sub battery 12S.

Further, in a case where the control device 20 determines that the remaining level is restored by mounting of the sub battery 12S and the mounted sub battery 12S is replaced with the replacement sub battery 12S after a potential temporarily becomes zero by the separation of the sub battery 12S while the working machine 1 is stopped, the control device 20 instructs the communication device 26 to transmit the collection signal and the vehicle body position, and the communication device 26 transmits the collection signal and the vehicle body signal to the computer (delivery base). The computer in the delivery base that has received the collection signal and the vehicle body position displays information indicating that "there is a battery collection request" and the vehicle body position on the monitor or the like of the computer. At the delivery base, the operator confirms the above displayed information, and instructs the delivery driver to move toward the farm field corresponding to the vehicle body position and collect the used sub battery 12S.

Furthermore, in a case where the automated driving mode is set, the control device 20 moves the tractor 2 to the area A of the farm field F that is in contact with the agricultural road R by the automated driving in a case where the control device 20 determines that replacement of the sub battery 12S being mounted is necessary. Since the delivered replacement sub battery 12S is left in the area A, the replacement of the sub battery 12S can be efficiently performed before the battery is used up in the work area of the farm field F.

### <Actual Operation>

An operation of battery charge/discharge control and control related to replacement of the sub battery 12S in the working machine 1 configured as described above will be described. As shown in the time chart of Fig. 9, an operation from time t0 at which the working machine 1 starts the work and traveling in the farm field F will be described. At time t0, it is assumed that the remaining level of each of the main battery 12M and the sub battery 12S is a maximum level Qmax. In addition, any one of the discharge mode and the regeneration mode is set. The first discharge mode is usually adopted in the discharge mode, and the first regeneration mode is usually adopted in the regeneration mode. At time t0, it is assumed that the adjuster 60 is set to the first discharge mode. Changes over time in the remaining level of the main battery 12M and the remaining level of the sub battery 12S are indicated by a solid line and a line with alternating long and short dashes, respectively.

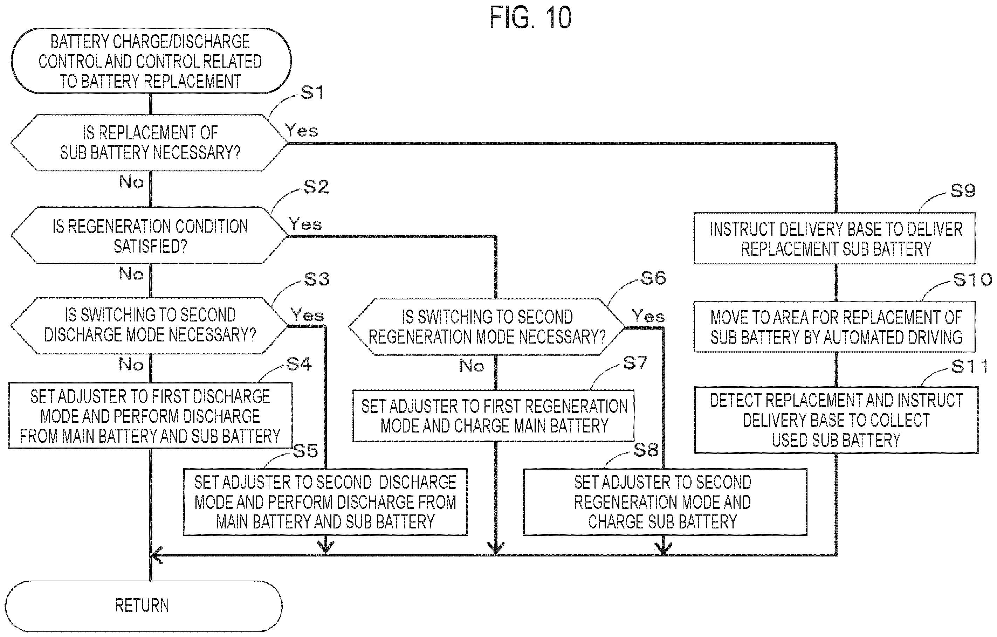

As shown in the flowchart of Fig. 10, first, it is determined whether or not replacement of the sub battery 12S is necessary (S1). More specifically, it is determined whether or not the remaining level of the sub battery 12S obtained by the above-described computation is equal to or lower than a predetermined value Qth1 (< Qmax). At time t0, since the remaining level of the sub battery 12S is the maximum level Qmax, a negative determination "No" is made in S1. Next, it is determined whether or not a regeneration condition is satisfied (S2). More specifically, it is determined whether or not electric power regeneration is performed from the electric motor 11 based on the operation amount of the accelerator pedal, the rotation speed of the electric motor 11, and the like at present. Since the electric power regeneration is not performed at time t0, a negative determination "No" is made in S2. Next, it is determined whether or not switching to the second discharge mode is necessary (S3). More specifically, it is determined whether or not the adjuster 60 is in the first discharge mode, whether or not the remaining level of the main battery 12M is higher than the remaining level of the sub battery 12S, and whether or not a remaining level difference dQ between the main battery 12M and the sub battery 12S is equal to or larger than a predetermined value dQth at present. Since the remaining level difference dQ is zero at time t0, a negative determination "No" is made in S3. Next, the adjuster 60 is set to the first discharge mode, and discharge from the main battery 12M and the sub battery 12S is performed (S4), and thereafter, the processing temporarily returns to S1.

In the first discharge mode, the adjuster 60 is controlled such that the received electric power from the sub power supply path P2 is greater than the received electric power from the main power supply path P1. In this state, the electric power is supplied from the main battery 12M to the electric motor 11 of the tractor 2 and the electric motor 50a of the spreading device 3, and the electric power is also supplied from the sub battery 12S to the electric motor 11 of the tractor 2 and the electric motor 50a of the spreading device 3 (see Fig. 6). That is, the supplied electric power of the main battery 12M and the sub battery 12S is used for both the traveling of the tractor 2 and the work of the spreading device 3. Here, the electric power supply from the sub battery 12S is greater than the power supply from the main battery 12M.

Therefore, as shown in Fig. 9, the first discharge mode is continued after time t0, and the remaining level of the sub battery 12S decreases more than the remaining level of the main battery 12M. According to the decreasing tendency, it is assumed that the remaining level difference dQ increases from zero after time t0, the remaining level of the main battery 12M becomes higher than the remaining level of the sub battery 12S, and the remaining level difference dQ becomes equal to or larger than the predetermined value dQth at time t1.

At time t1, a negative determination "No" is made in S1 and S2 in Fig. 10, and an affirmative determination "Yes" is made in S3. Next, the adjuster 60 is set to the second discharge mode, and discharge from the main battery 12M and the sub battery 12S is performed (S5), and thereafter, the processing temporarily returns to S1.

In the second discharge mode, the adjuster 60 is controlled such that the received electric power from the main power supply path P1 is greater than the received electric power from the sub power supply path P2. In this state, the electric power is supplied from the main battery 12M to the electric motor 11 of the tractor 2 and the electric motor 50a of the spreading device 3, and the electric power is also supplied from the sub battery 12S to the electric motor 11 of the tractor 2 and the electric motor 50a of the spreading device 3 (see Fig. 6). That is, the supplied electric power of the main battery 12M and the sub battery 12S is used for both the traveling of the tractor 2 and the work of the spreading device 3. Here, the electric power supply from the main battery 12M is greater than the electric power supply from the sub battery 12S.

Therefore, as shown in Fig. 9, the second discharge mode is continued after time t1, and the remaining level of the main battery 12M decreases more than the remaining level of the sub battery 12S. According to the decreasing tendency, the remaining level difference dQ decreases after time t1. Consequently, the remaining levels of the main battery 12M and the sub battery 12S can be leveled. It is assumed that the regeneration condition is satisfied at time t2 after the second discharge mode is continued after time t1.

At time t2, a negative determination "No" is made in S1 and an affirmative determination "Yes" is made in S2 in Fig. 10. Next, it is determined whether or not switching to the second regeneration mode is necessary (S6). More specifically, it is determined whether or not the remaining level of the main battery 12M is equal to or higher than a predetermined value Qth2 (Qmax > Qth2 > Qth1) at present. At time t2, the remaining level of the main battery 12M greatly decreases and is lower than the predetermined value Qth2, and thus, a negative determination "No" is made in S6. Next, the adjuster 60 is set to the first regeneration mode to charge the main battery 12M (S7), and then the processing temporarily returns to S1.

In the first regeneration mode, the adjuster 60 is controlled such that the electric power transmitted to the sub power supply path P2 is set to zero and the entire electric power received by the adjuster 60 is transmitted to the main power supply path P1. In this state, the electric power is supplied from the electric motor 11 of the tractor 2 to the main battery 12M (see Fig. 6). Here, the electric power supply to the main battery 12M is greater than the electric power supply to the sub battery 12S.

Therefore, as shown in Fig. 9, the first regeneration mode is continued after time t2, the remaining level of the sub battery 12S does not increase, and the remaining level of the main battery 12M increases more. It is assumed that the remaining level of the main battery 12M becomes equal to or higher than the predetermined value Qth2 at time t3.

At time t3, a negative determination "No" is made in S1, and an affirmative determination "Yes" is made in S2 and S6 in Fig. 10. Next, the adjuster 60 is set to the second regeneration mode to charge the sub battery 12S (S8), and then the processing temporarily returns to S1.

In the second regeneration mode, the adjuster 60 is controlled such that the electric power transmitted to the main power supply path P1 is set to zero and the entire electric power received by the adjuster 60 is transmitted to the sub power supply path P2. In this state, the electric power is supplied from the electric motor 11 of the tractor 2 to the sub battery 12S (see Fig. 6). Here, the electric power supply to the sub battery 12S is greater than the electric power supply to the main battery 12M.

Therefore, as shown in Fig. 9, the second regeneration mode is continued after time t3, the remaining level of the main battery 12M does not increase, and the remaining level of the sub battery 12S increases more. Consequently, the remaining levels of the main battery 12M and the sub battery 12S can be leveled. It is assumed that the regeneration condition is not satisfied at time t4 after the second regeneration mode is continued after time t3. At time t4, the remaining level of the main battery 12M is higher than the remaining level of the sub battery 12S, and the remaining capacity difference dQ is smaller than the predetermined value dQth.

At time t4, a negative determination "No" is made in S1, S2, and S3 in Fig. 10. Next, the adjuster 60 is set to the first discharge mode, and discharge from the main battery 12M and the sub battery 12S is performed (S4), and thereafter, the processing temporarily returns to S1.

Therefore, as shown in Fig. 9, the first discharge mode is continued after time t4, and the remaining level of the sub battery 12S decreases more than the remaining level of the main battery 12M. At time t5, it is assumed that the remaining level of the sub battery 12S becomes equal to or lower than the predetermined value Qth1.

At time t5, an affirmative determination "Yes" is made in S1 of Fig. 10. Next, the delivery base is instructed to deliver the new replacement sub battery 12S (S9) (see Fig. 11(a)). The working machine 1 is controlled to move to the area A of the farm field F by the automated driving (S10) (see Fig. 11(b)). Then, when the sub battery 12S is replaced in the area A and the used sub battery 12S is left in the area A, the delivery base is instructed to detect the replacement and collect the used sub battery 12S (S11) (see Fig. 11(c)).

### <Summary>

As described above, the working machine 1 according to the embodiment of the present invention includes the storing device that stores the energy source, and is driven by the energy source. The storing device includes the main battery 12M (first storing device) provided in the working machine 1 and the sub battery 12S (second storing device) provided at a position different from the main battery 12M of the working machine 1, and among these batteries, the sub battery 12S is attachable to and detachable from the working machine 1. Therefore, the storing device that stores the energy source can be replaced, and the deterioration of the working efficiency can be suppressed. The traveling and work can be continued for a longer time based on a capacity of the sub battery 12S in addition to a capacity of the main battery 12M. Since the sub battery 12S is attachable and detachable, the charged sub battery 12S prepared for replacement in advance can be mounted by separating the sub battery 12S when the remaining level has decreased. By replacing the sub battery 12S, the energy source can be easily replenished in a short time. Therefore, the working efficiency can be appropriately improved by adjusting the discharge amounts of the main battery 12M and the sub battery 12S, such as by making the discharge amount of the sub battery 12S larger than that of the main battery 12M.

The working machine 1 according to the embodiment particularly includes the tractor 2 (traveling vehicle) and the spreading device 3 (working device) provided on the tractor 2. The main battery 12M is not attachable to and detachable from the working machine 1 and supplies the electric power for driving the tractor 2 and/or the spreading device 3. The sub battery 12S is attachable to and detachable from the working machine 1, and supplies the electric power for driving the tractor 2 in a case were the electric power for driving the tractor 2 and/or the spreading device 3 is supplied by the main battery 12M. With this configuration, it is possible to suppress a decrease in the remaining level of the main battery 12M based on the electric power supplied from the sub battery 12S for driving the tractor 2. In a case where the main battery 12M is used up, charging work is necessary, and according to the above configuration, a timing of the charging work can be extended, and the working efficiency can be appropriately improved. In particular, the above configuration is effective in a case where a load of the tractor 2 is large.

In the working machine 1 according to the embodiment, in particular, the sub battery 12S supplies the electric power for driving the spreading device 3 in a case where the electric power for driving the tractor 2 and/or the spreading device 3 is supplied by the main battery 12M. With this configuration, it is possible to suppress a decrease in the remaining level of the main battery 12M based on the electric power supplied from the sub battery 12S for driving the tractor 2 and the spreading device 3. Therefore, a decrease in the remaining level of the main battery 12M can be further suppressed, and the timing of the charging work of the main battery 12M can be further extended.

The working machine 1 according to the embodiment particularly includes the tractor 2, the spreading device 3 provided on the tractor 2, and the electric motor 11 (regeneration device) capable of regenerating the electric power from the tractor 2. The main battery 12M is a battery that is not attachable to and detachable from the working machine 1 and can charge and discharge the electric energy. The sub battery 12S is a battery that is attachable to and detachable from the working machine 1 and can charge and discharge the electric energy. In addition, the working machine 1 includes the battery charge/discharge control device 20G (charge control unit) that charges the sub battery 12S with the electric energy obtained by electric power regeneration from the electric motor 11 in a case where the remaining level of the main battery 12M is equal to or higher than the predetermined value Qth2. With this configuration, in a case where the remaining level of the main battery 12M is high, the charge amount of the sub battery 12S can preferentially be increased in the second regeneration mode, and the remaining levels of the respective batteries can be leveled. In a case where the remaining level of the main battery 12M is low, the charge amount of the main battery 12M can preferentially be increased in the first regeneration mode, and a timing of the charging work of the main battery 12M can be extended.

In the working machine 1 according to the embodiment, in particular, the main battery 12M is a battery that is not attachable to and detachable from the working machine 1 and can charge and discharge the electric energy. The sub battery 12S is a battery that is attachable to and detachable from the working machine 1 and can charge and discharge the electric energy. The working machine 1 includes the battery charge/discharge control device 20G (discharge control unit) that makes a discharge amount from one of the main battery 12M and the sub battery 12S having a higher remaining level of the electric energy larger than a discharge amount from the other. With this configuration, for example, in a case where the first discharge mode for preferentially increasing the discharge amount of the sub battery 12S is set, the remaining level of the main battery 12M may become higher than the remaining level of the sub battery 12S, and the remaining level difference dQ may also be increased. In a case where the remaining level difference dQ increases, the discharge amount of the main battery 12M can preferentially be increased in the second discharge mode, and the remaining levels of the respective batteries can be leveled.

The working machine 1 according to the embodiment particularly includes the tractor 2 and the spreading device 3 provided on the tractor 2. The main battery 12M is not attachable to and detachable from the working machine 1, and the sub battery 12S is mounted on the tractor 2 at a position opposite to the spreading device 3. With this configuration, the sub battery 12S can also function as the weight. The sub battery 12S can be mounted on the side opposite to the spreading device 3 which is a weight load for the tractor 2, and the entire working machine 1 can easily achieve the weight balance.

The working machine 1 according to the embodiment particularly includes the tractor 2, the spreading device 3, the first coupling device 6 that is provided on the tractor 2 and can couple the spreading device 3, the power supply cable 61B (supply path) which is a path of the electric power supplied from the main battery 12M and the sub battery 12S to the spreading device 3, and the connector 61 that can connect and disconnect the power supply cable 61B, allows supply of the electric power when connected, and cuts off supply of the electric power when disconnected. With this configuration, the length and the routing of the power supply cable 61B can be adjusted to give a degree of freedom to the position of the electric motor 50a that drives the spreading device 3. Further, the connector 61 can be connected when coupling the spreading device 3, or the connector 61 can be removed when separating the coupled spreading device 3.

In the working machine 1 according to the embodiment, in particular, the connector 61 is provided on the tractor 2 so as to face the spreading device 3 when the spreading device 3 is coupled to the first coupling device 6. Specifically, the connector 61 is provided at the rear portion of the tractor 2, and is located above the front end portion of the top link 6B1 of the first coupling device 6 and the front end portion of the lift arm 6A. With this configuration, the connector 61 can be brought close to the electric motor 50a, and a necessary distance of the power supply cable 61B can be shortened. As a result, the routing of the power supply cable 61B is facilitated. Furthermore, a conduction resistance of the power supply cable 61B can be reduced. In a case where the first coupling device 6 is provided at the rear portion of the tractor 2, the connector 61 is disposed above the first coupling device 6, so that interference between the first coupling device 6 and the power supply cable 61B can be suppressed.

In the working machine 1 according to the embodiment, in particular, the storing device is a battery capable of charging and discharging the electric energy as the energy source, and the spreading device 3 can receive a signal from the tractor 2. The working machine 1 includes the communication cable 61C (communication path) that transmits a signal from the tractor 2 toward the spreading device 3, and the connector 61 that can connect and disconnect the power supply cable 61B and the communication cable 61C, allows supply of the electric energy and transmission of the signal when connected, and cuts off supply of the electric energy and transmission of the signal when disconnected. With this configuration, a communication connector can be effectively used and integrated with a power supply connector, and the power supply cable 61B and the communication cable 61C can be connected and disconnected with one connector 61. Therefore, an effort for connector connection can be reduced, and the number of components can also be reduced. In addition, the power supply cable 61B and the communication cable 61C can also be integrated by binding or the like, so that an effort of the routing can be reduced as compared with a case of separately routing the power supply cable 61B and the communication cable 61C.

In the working machine 1 according to the embodiment, in particular, the sub battery 12S including the second coupling device 7 that can couple the sub battery 12S and achieves mounting of the sub battery 12S on the working machine 1 when the sub battery 12S is coupled is a battery that is attachable to and detachable from the second coupling device 7 and can charge and discharge the electric energy as the energy source, and includes the terminal portion 12S2 (battery terminal portion) for discharging the electric energy. The second coupling device 7 includes the attachment hook 7D (terminal connection portion) connected to the terminal portion 12S2 when the sub battery 12S is coupled, and can supply the electric energy from the sub battery 12S to the working machine 1 via the terminal portion 12S2 and the attachment hook 7D. With this configuration, the electric energy can be supplied only by coupling the sub battery 12S to the second coupling device 7. Therefore, in a case of replacing the sub battery 12S, work such as cable connection/separation in the sub battery 12S becomes unnecessary. Therefore, work for battery replacement can be facilitated.

It should be understood that the embodiments disclosed herein are illustrative in all respects and not restrictive. The scope of the present invention is indicated not by the above description but by the claims, and it is intended that meanings equivalent to the claims and all modifications within the scope are included.

### REFERENCE SIGNS LIST

- 1: Working machine
- 2: Traveling vehicle (tractor)
- 3: Working device (spreading device)
- 3a: Work control device
- 6: First coupling device
- 7: Second coupling device
- 7B: Three-point link mechanism
- 7B1: Top link
- 7B2: Lower link 7
- 7B4: Joint
- 7D: Attachment hook
- 7DL: Attachment hook
- 7DR: Attachment hook
- 7D1L: Recess
- 7D1R: Recess
- 11: Electric motor
- 12M: Main battery
- 12S: Sub battery
- 12S2: Terminal portion
- 12S2L: Terminal portion
- 12S2R: Terminal portion
- 12S4: Link bar
- 12S5: Upper end portion
- 20: Control device
- 20G: Battery charge/discharge control device
- 26: Communication device
- 60: Adjuster
- 61: Connector
- 61A: Cable connector
- 61B: Power supply cable
- 61C: Communication cable
- N1: In-vehicle network
- P1: Main power supply path
- P2: Sub power supply path
- P3: Electric motor supply path
- P4: Working device supply path
- Q4: Remaining level
- Qth2: Predetermined value
- dQth: Predetermined value

## Claims

1. A working machine comprising a storing device that stores an energy source, the working machine being driven by the energy source, wherein
the storing device includes:
a first storing device provided in the working machine; and
a second storing device provided at a position different from the first storing device of the working machine, and
at least one of the first storing device and the second storing device is attachable to and detachable from the working machine.

2. The working machine according to claim 1, comprising:
a traveling vehicle; and
a working device provided on the traveling vehicle, wherein
the first storing device is not attachable to and detachable from the working machine and supplies the energy source for driving the traveling vehicle and/or the working device, and
the second storing device is attachable to and detachable from the working machine and supplies the energy source for driving the traveling vehicle in a case where the energy source for driving the traveling vehicle and/or the working device is supplied by the first storing device.

3. The working machine according to claim 2, wherein
the second storing device supplies the energy source for driving the working device in a case where the energy source for driving the traveling vehicle and/or the working device is supplied by the first storing device.

4. The working machine according to any one of claims 1 to 3, comprising:
a traveling vehicle;
a working device provided on the traveling vehicle; and
a regeneration device that regenerates electric power from the traveling vehicle, wherein
the first storing device is a battery that is not attachable to and detachable from the working machine and charges and discharges electric energy as the energy source,
the second storing device is a battery that is attachable to and detachable from the working machine and charges and discharges electric energy as the energy source, and
the working machine comprises a charge control unit that charges the second storing device with electric energy regenerated by the regeneration device in a case where a remaining level of the electric energy in the first storing device is equal to or higher than a predetermined value.

5. The working machine according to any one of claims 1 to 3, wherein
the first storing device is a battery that is not attachable to and detachable from the working machine and charges and discharges electric energy as the energy source,
the second storing device is a battery that is attachable to and detachable from the working machine and charges and discharges electric energy as the energy source, and
the working machine comprises a discharge control unit that makes a discharge amount from one of the first storing device and the second storing device having a higher remaining level of the electric energy larger than a discharge amount from other of the first storing device and the second storing device.

6. The working machine according to any one of claims 1 to 3, comprising:
a traveling vehicle; and
a working device provided on the traveling vehicle, wherein
the first storing device is not attachable to and detachable from the working machine, and
the second storing device is attachable to and detachable from the working machine and is mounted at a position in the traveling vehicle on a side opposite to the working device.

7. The working machine according to any one of claims 1 to 3, comprising:
a traveling vehicle;
a working device;
a first coupling device provided in the traveling vehicle and that couples the working device;
a supply path which is a path of the energy source supplied from the storing device to the working device; and
a connector that connects and disconnects the supply path, allows supply of the energy source when connected, and cuts off supply of the energy source when disconnected.

8. The working machine according to claim 7, wherein
the connector is provided on the traveling vehicle so as to face the working device when the working device is coupled to the first coupling device.

9. The working machine according to claim 7, wherein
the storing device is a battery that charges and discharges electric energy as the energy source,
the working device receives a signal from the traveling vehicle, and
the working machine comprises:
a communication path that transmits the signal from the traveling vehicle toward the working device; and
a connector that connects and disconnects the supply path and the communication path, allows supply of the energy source and transmission of the signal when connected, and cuts off supply of the energy source and transmission of the signal when disconnected.

10. The working machine according to any one of claims 1 to 3, comprising:
a second coupling device that couples the second storing device and in which mounting of the second storing device on the working machine is achieved when the second storing device is coupled, wherein
the second storing device is a battery that is attachable to and detachable from the second coupling device and charges and discharges electric energy as the energy source, and includes a battery terminal portion for discharging the electric energy,
the second coupling device includes a terminal connection portion connected to the battery terminal portion when the second storing device is coupled, and
the electric energy is supplied from the second storing device to the working machine via the battery terminal portion and the terminal connection portion.

11. The working machine according to claim 4, wherein
the first storing device is a battery that is not attachable to and detachable from the working machine and charges and discharges electric energy as the energy source,
the second storing device is a battery that is attachable to and detachable from the working machine and charges and discharges electric energy as the energy source, and
the working machine comprises a discharge control unit that makes a discharge amount from one of the first storing device and the second storing device having a higher remaining level of the electric energy larger than a discharge amount from other of the first storing device and the second storing device.

12. The working machine according to claim 4, comprising:
a traveling vehicle; and
a working device provided on the traveling vehicle, wherein
the first storing device is not attachable to and detachable from the working machine, and
the second storing device is attachable to and detachable from a working machine and is mounted at a position in the traveling vehicle on a side opposite to the working device.

13. The working machine according to claim 5, comprising:
a traveling vehicle; and
a working device provided on the traveling vehicle, wherein
the first storing device is not attachable to and detachable from the working machine, and
the second storing device is attachable to and detachable from the working machine and is mounted at a position in the traveling vehicle on a side opposite to the working device.

14. The working machine according to claim 4, comprising:
a traveling vehicle;
a working device;
a first coupling device provided in the traveling vehicle and that couples the working device;
a supply path which is a path of the energy source supplied from the storing device to the working device; and
a connector that connects and disconnects the supply path, allows supply of the energy source when connected, and cuts off supply of the energy source when disconnected.

15. The working machine according to claim 5, comprising:
a traveling vehicle;
a working device;
a first coupling device provided in the traveling vehicle and that couples the working device;
a supply path which is a path of the energy source supplied from the storing device to the working device; and
a connector that connects and disconnects the supply path, allows supply of the energy source when connected, and cuts off supply of the energy source when disconnected.

16. The working machine according to claim 6, comprising:
a traveling vehicle;
a working device;
a first coupling device provided in the traveling vehicle and that couples the working device;
a supply path which is a path of the energy source supplied from the storing device to the working device; and
a connector that connects and disconnects the supply path, allows supply of the energy source when connected, and cuts off supply of the energy source when disconnected.

17. The working machine according to claim 8, wherein
the storing device is a battery that charges and discharges electric energy as the energy source,
the working device receives a signal from the traveling vehicle, and
the working machine comprises:
a communication path that transmits the signal from the traveling vehicle toward the working device; and
a connector that connects and disconnects the supply path and the communication path, allows supply of the energy source and transmission of the signal when connected, and cuts off supply of the energy source and transmission of the signal when disconnected.

18. The working machine according to claim 4, comprising:
a second coupling device that couples the second storing device and in which mounting of the second storing device on the working machine is achieved when the second storing device is coupled, wherein
the second storing device is a battery that is attachable to and detachable from the second coupling device and charges and discharges electric energy as the energy source, and includes a battery terminal portion for discharging the electric energy,
the second coupling device includes a terminal connection portion connected to the battery terminal portion when the second storing device is coupled, and
the electric energy is supplied from the second storing device to the working machine via the battery terminal portion and the terminal connection portion.

19. The working machine according to claim 5, comprising:
a second coupling device that couples the second storing device and in which mounting of the second storing device on the working machine is achieved when the second storing device is coupled, wherein
the second storing device is a battery that is attachable to and detachable from the second coupling device and charges and discharges electric energy as the energy source, and includes a battery terminal portion for discharging the electric energy,
the second coupling device includes a terminal connection portion connected to the battery terminal portion when the second storing device is coupled, and
the electric energy is supplied from the second storing device to the working machine via the battery terminal portion and the terminal connection portion.

20. The working machine according to claim 6, comprising:
a second coupling device that couples the second storing device and in which mounting of the second storing device on the working machine is achieved when the second storing device is coupled, wherein
the second storing device is a battery that is attachable to and detachable from the second coupling device and that charges and discharges electric energy as the energy source, and includes a battery terminal portion for discharging the electric energy,
the second coupling device includes a terminal connection portion connected to the battery terminal portion when the second storing device is coupled, and
the electric energy is supplied from the second storing device to the working machine via the battery terminal portion and the terminal connection portion.

21. The working machine according to claim 7, comprising:
a second coupling device that couples the second storing device and in which mounting of the second storing device on the working machine is achieved when the second storing device is coupled, wherein
the second storing device is a battery that is attachable to and detachable from the second coupling device and charges and discharges electric energy as the energy source, and includes a battery terminal portion for discharging the electric energy,
the second coupling device includes a terminal connection portion connected to the battery terminal portion when the second storing device is coupled, and
the electric energy is supplied from the second storing device to the working machine via the battery terminal portion and the terminal connection portion.

22. The working machine according to claim 8, comprising:
a second coupling device that couples the second storing device and in which mounting of the second storing device on the working machine is achieved when the second storing device is coupled, wherein
the second storing device is a battery that is attachable to and detachable from the second coupling device and charges and discharges electric energy as the energy source, and includes a battery terminal portion for discharging the electric energy,
the second coupling device includes a terminal connection portion connected to the battery terminal portion when the second storing device is coupled, and
the electric energy is supplied from the second storing device to a working machine via the battery terminal portion and the terminal connection portion.

23. The working machine according to claim 9, comprising:
a second coupling device that couples the second storing device and in which mounting of the second storing device on the working machine is achieved when the second storing device is coupled, wherein
the second storing device is a battery that is attachable to and detachable from the second coupling device and charges and discharges electric energy as the energy source, and includes a battery terminal portion for discharging the electric energy,
the second coupling device includes a terminal connection portion connected to the battery terminal portion when the second storing device is coupled, and
the electric energy is supplied from the second storing device to a working machine via the battery terminal portion and the terminal connection portion.
